# EUROPEAN PATENT APPLICATION

(11) **EP 4 418 259 A1**
(43) Date of publication of application: **21.08.2024**
(21) Application number: 23875904.7
(22) Date of filing: 07.09.2023
(51) Int. Cl.: G10K 11/165, B60R 13/02, B60R 13/08, E04B 1/86, G10K 11/16

(54) **SOUND-ABSORBING/INSULATING THERMAL INSULATION MEMBER, BUILDING WALL MEMBER, AND AUTOMOBILE ROOF SILENCER**

(30) Priority: 15.12.2022 JP 2022200055
(71) Applicant: Howa Co., Ltd., Kasugai-shi, Aichi 486-0969 (JP)
(72) Inventor: YANAGIHARA, Masahiko, Kasugai-shi, Aichi 486-0969 (JP); YAMAMOTO, Hiroshi, Kasugai-shi, Aichi 486-0969 (JP)
(74) Representative: Prüfer & Partner mbB Patentanwälte · Rechtsanwälte
(86) International application number: PCT/JP2023/032615
(87) International publication number: WO 2024/127745

(57) **Abstract**

A chip mixed body 10 is formed by mixing a plurality of urethane chips P, a plurality of urethane chips Q, a plurality of chip-shaped fiber lumps F, and a plurality of chip-shaped fiber pieces G with a binder U under hardening the binder U.

## Description

The present invention relates to a sound-absorbing, sound-insulating, and heat-insulating member, a wall member for architecture, and a roof silencer for a motor vehicle.

In recent years, urethane foam material has been widely used due to its performances as material for forming parts used for motor vehicles or wall members used for architecture. It is accordingly requested to manufacture the urethane foam material on a large scale.

Such urethane foam material is manufactured to be, for example, into a longitudinal shape in its manufacturing process. Thus, the urethane foam material is cut for each of parts for motor vehicles or each of parts for architecture into a shape necessary as forming material of the parts for motor vehicles or the parts for architecture, when adopting the urethane foam material as the forming material of the parts for motor vehicles or the parts for architecture. Although offcuts are generated in the urethane foam material, the occurrence of such offcuts increases as the amount of urethane material manufactured increases.

The offcuts, however, strongly tend to be disposed of as wasted or discarded materials. This means that not only offcuts of urethane foam material are wasted as resources, but also economic losses are increased. Due to this matter, it is requested to reduce the economic losses by using the offcuts of urethane foam material as resources.

In response to such a request, it is considered to recycle offcuts generated as discarded material from urethane foam material. In particular, urethane foam material including open cells has been manufactured more in recent years. It is, therefore, requested still more strongly to recycle offcuts generated from the urethane foam material including open cells. If the request is achieved, it will be possible not only to effectively reuse the offcuts without wasting them by recycling of the offcuts, but also to effectively reduce the economic losses caused by discarding the offcuts.

In addition, it is often required in recent years to have all of sound absorption property, sound insulation property, and heat insulation property for parts adopted for motor vehicles or wall members adopted for architecture such buildings from the perspective of wanting to make still more comfortable the in-vehicle environment of each of motor vehicles or the indoor residential environment of each of buildings.

For such a request, it is conceivable to use, for example, chip urethane manufactured by a method for manufacturing chip urethane disclosed in Patent Literature 1 below.

In the method for manufacturing chip urethane, chip materials are formed by pulverizing discarded or wasted parts made of urethane or the like by a pulverizer. Then, urethane-based binders are mixed with the chip materials by a mixer. Thereafter, the mixture thus mixed is molded by a press mold or die and manufactured as the above-mentioned chip urethane.

### Prior Art Document

### Patent Literature

Patent Literature 1: Japanese Unexamined Patent Application Publication No. 8-72075

### PROBLEM TO BE SOLVED BY THE INVENTION

By the way, even offcuts of urethane foam material as discarded parts are utilized and pulverized to be formed as chip materials in the above-mentioned method for manufacturing chip urethane, the chip materials include open cells similar to the offcuts in case the offcuts include open cells.

The chip material including open cells, however, has air permeability. Although the chip material thus has sound absorption performance, it is inferior in sound insulation performance and heat insulation performance. Even when, for example, a heat-insulating member is thus formed by using the chip materials including open cells, the heat-insulating member lacks sound insulation performance and heat insulation performance.

In addition, when, for example, cut fibers are blended with such chip materials to form a heat-insulating member, the heat-insulating member may exhibit sound absorption performance, but lacks sound insulation performance and heat insulation performance, as described above.

For addressing what have been described above, it is an object of the present invention to provide a sound-absorbing, sound-insulating, and heat-insulating member, a wall member for architecture, and a roof silencer for a motor vehicle that may favorably exhibit sound absorption performance, sound insulation performance, and heat insulation performance by devising the cellular structure of offcuts of urethane foam material and also making use of fiber material.

### MEANS FOR SOLVING THE PROBREM

For solving the problem described above, a sound-absorbing, sound-insulating, and heat-insulating member formed with a chip mixed body according to the present invention comprises a plurality of semi-closed cell urethane chips, a plurality of open cell urethane chips, a plurality of fiber chips, and a binder.

The plurality of semi-closed cell urethane chips each include a semi-closed cell structure,

The plurality of open cell urethane chips each include an open cell structure, and
the plurality of fiber chips each include at least one of a chip-shaped fiber lump and a chip-shaped fiber fragment.

The tip mixed body is formed by mixing the plurality of semi-closed cell urethane chips, the plurality of open cell urethane chips, and the plurality of fiber chips dispersively with the binder.

According to the present invention, the sound-absorbing, sound-insulating, and heat-insulating member formed form the chip mixed body is formed by dispersively mixing the plurality of semi-closed cell urethane chips, the plurality of open cell urethane chips, and the plurality of fiber chips with the binder.

Herein, the plurality of open cell urethane chips have respectively the open cell structure. Thus, the plurality of open cell urethane chips exhibit respectively sound absorption performance on the basis of the open cell structure thereof. In addition, the plurality of fiber chips each include at least one of the chip-shaped fiber lump and the chip-shaped fiber fragment. Thus, the plurality of fiber chips each exhibit sound absorption performance to play a role in assisting the sound absorption performance due to the open cell structure of each of the plurality of open cell urethane chips, on the basis of at least one of the chip-shaped fiber lump and the chip-shaped fiber fragment.

Thus, when noises that are sounds enter the sound-absorbing, sound-insulating, and heat-insulating member, the noises can be favorably absorbed by the plurality of open cell urethane chips in the binder with the sound absorption performance of each open cell structure of the plurality of open cell urethane chips. Herein, the plurality of fiber chips each play a role in assisting the sound absorption performance due to the open cell structure of each of the plurality of open cell urethane chips in the binder with the sound absorption performance of at least one of the chip-shaped fiber lump and the chip-shaped fiber fragment of each of the plurality of fiber chips.

This means that the noises entering the sound-absorbing, sound-insulating, and heat-insulating member can be absorbed still more favorably by the sound-absorbing, sound-insulating, and heat-insulating member with a synergistic effect of the sound absorption performance due to the open cell structure of each of the plurality of open cell urethane chips and the sound absorption performance of at least one of the chip-shaped fiber lump and the chip-shaped fiber fragment of each of the plurality of fiber chips in the binder of the sound-absorbing, sound-insulating, and heat-insulating member.

In addition, in the sound-absorbing, sound-insulating, and heat-insulating member made of the chip mixed body, the plurality of semi-closed cell urethane chips each have the semi-closed cell structure. Therefore, the plurality of semi-closed cell urethane chips each exhibit sound insulation performance and heat insulation performance on the basis of the semi-closed cell structure of each of the plurality of semi-closed cell urethane chips.

Thus, the noises entering the sound-absorbing, sound-insulating, and heat-insulating member as described above can be insulated favorably by the plurality of semi-closed cell urethane chips with the sound insulation performance based on the semi-closed cell structure each of the plurality of semi-closed cell urethane chips, in addition to absorbing based on the synergetic sound absorption effect by the plurality of open cell urethane chips and the plurality of fiber chips described above.

In addition, when heat enters the sound-absorbing, sound-insulating, and heat-insulating member separately from the noises, the heat can be favorably insulated by the plurality of semi-closed cell urethane chips with the heat insulation performance based on the semi-closed cell structure of each of the plurality of semi-closed cell urethane chips.

In short, the sound-absorbing, sound-insulating, and heat-insulating member is formed by the chip mixed body obtained by dispersively mixing the plurality of semi-closed cell urethane chips, the plurality of open cell urethane chips, and the plurality of fiber chips in the binder. Thus, the sound-absorbing, sound-insulating, and heat-insulating member by itself can favorably absorb and insulate the incident noises and also can insulate favorably the incident heat by exhibiting all of the sound absorption performance, the sound insulation performance, and the heat insulation performance.

In another point of view, a sound-absorbing, sound-insulating, and heat-insulating member formed with a chip mixed body according to the present invention comprises a plurality of closed-cell urethane chips, a plurality of open cell urethane chips, a plurality of fiber chips, and a binder.

The plurality of closed-cell urethane chips each include a closed-cell structure,
the plurality of open cell urethane chips each include an open cell structure, and
the plurality of fiber chips each include at least one of a chip-shaped fiber lump and a chip-shaped fiber fragment.

The chip mixed body is formed by mixing the plurality of closed-cell urethane chips, the plurality of open cell urethane chips, and the plurality of fiber chips dispersively with the binder.

According to the present invention, the sound-absorbing, sound-insulating, and heat-insulating member made of the chip mixed body differs from the present invention described above, only in including the plurality of closed-cell urethane chips instead of the plurality of semi-closed cell urethane chips.

Herein, the plurality of closed-cell urethane chips each have the closed-cell structure. Each of the closed-cell structure has at its cellular shape has a sealing degree higher than that of the cellular shape of the semi-closed cell structure of each of the plurality of semi-closed cell urethane chips. Therefore, the plurality of closed-cell urethane chips can respectively exhibit sound insulation performance and heat insulation performance still more favorably in comparison with each semi-closed cell urethane chip on the basis of the closed-cell structure of the closed-cell urethane chip.

Thus, when noises enter the sound-absorbing, sound-insulating, and heat-insulating member, the sound-absorbing, sound-insulating, and heat-insulating member can insulate the noises still more favorably with the sound insulation performance based on the closed-cell structure of each of the plurality of closed-cell urethane chips, in addition to be capable of absorbing the noises still more favorably with the synergistic effect of the sound absorption performance due to each open cell structure of the plurality of open cell urethane chips and the sound absorption performance of the plurality of fiber chips as described above.

In addition, when heat enters the sound-absorbing, sound-insulating, and heat-insulating member, the sound-absorbing, sound-insulating, and heat-insulating member can favorably insulate still more the heat by the plurality of closed-cell urethane chips on the basis of each closed-cell structure of the plurality of closed-cell urethane chips than on the basis of each semi-closed cell structure of the plurality of semi-closed cell urethane chips.

In short, the sound-absorbing, sound-insulating, and heat-insulating member is formed by the chip mixed body obtained by dispersively mixing the plurality of closed-cell urethane chips having a sealing degree higher than that of the plurality of semi-closed cell urethane chips in the binder along with the plurality of open cell urethane chips and the plurality of fiber chips. Therefore, the sound-absorbing, sound-insulating, and heat-insulating member by itself can favorably absorb and insulate the incident noises, and also can favorably insulate the incident heat by exhibiting still more favorable heat insulation performance and sound insulation performance together with sound absorption performance.

In still another point of view, in the sound-absorbing, sound-insulating, and heat-insulating member according to the present invention described above, the present invention comprises a plurality of closed-cell urethane chips.

The plurality of closed-cell urethane chips each include a closed-cell structure, and
the tip mixed body is formed by mixing the plurality of closed-cell urethane chips, the plurality of semi-closed cell urethane chips, the plurality of open cell urethane chips, and the plurality of fiber chips dispersively with the binder.

According to the present invention, the sound-absorbing, sound-insulating, and heat-insulating member made of the chip mixed body further includes the plurality of closed-cell urethane chips additionally in the present invention described above.

Herein, the plurality of closed-cell urethane chips each have the closed-cell structure as described above. Therefore, the plurality of closed-cell urethane chips can respectively exhibit sound insulation performance and heat insulation performance still more favorably on the basis of the closed-cell structure of the plurality of the closed-cell urethane chips than the plurality of semi-closed cell urethane chips, as described above.

Thus, when noises enter the sound-absorbing, sound-insulating, and heat-insulating member, the sound-absorbing, sound-insulating, and heat-insulating member can absorb the noises still more favorably with the synergistic effect of the sound absorption performance due to the open cell structure of each of the plurality of open cell urethane chips and the sound absorption performance of at least one of the chip-shaped fiber lump and the chip-shaped fiber fragment of each of the plurality of fiber chips in the binder and can insulate the noises still more favorably with the synergistic effect of the sound insulation performance based on the semi-closed cell structure of each of the plurality of semi-closed cell urethane chips and the sound insulation performance of the closed-cell structure of each of the plurality of closed-cell urethane chips still more favorable than the sound insulation performance based on the semi-closed cell structure in the binder.

In addition, when heat enters the sound-absorbing, sound-insulating, and heat-insulating member, the sound-absorbing, sound-insulating, and heat-insulating member can favorably insulate the heat still more with both of the heat insulation performance of each semi-closed cell structure of the plurality of semi-closed cell urethane chips and the heat insulation performance of each closed-cell structure of the plurality of closed-cell urethane chips still more favorable than the heat insulation performance of each semi-closed cell structure.

In short, the sound-absorbing, sound-insulating, and heat-insulating member is formed by the chip mixed body obtained by dispersively mixing the plurality of closed-cell urethane chips each having a sealing degree higher than that of each of the plurality of semi-closed cell urethane chips in the binder along with the plurality of semi-closed cell urethane chips, the plurality of open cell urethane chips, and the plurality of fiber chips. Thus, the sound-absorbing, sound-insulating, and heat-insulating member by itself can favorably absorb and insulate the incident noises still more and can also insulate the incident heat still more favorably by exhibiting still more favorable sound insulation performance and heat insulation performance together with sound absorption performance.

In another aspect of the present invention, in the sound-absorbing, sound-insulating, and heat-insulating member according to the above-mentioned invention, the present invention is characterized by the followings.

The plurality of semi-closed cell urethane chips are formed by pulverizing offcuts, the offcuts being produced from urethane foam material including a semi-closed cell structure in a process of manufacturing the urethane foam material,
the plurality of open cell urethane chips are formed by pulverizing offcuts, the offcuts being produced from urethane foam material including an open cell structure in a process of manufacturing said urethane foam material, and
the plurality of fiber chips are formed by pulverizing fiber material for discarding.

The chip mixed body is formed by mixing the plurality of semi-closed cell urethane chips, the plurality of open cell urethane chips, and the plurality of fiber chips dispersively with the binder in a liquid state of the binder, and then under hardening of the binder.

According to this construction, the sound-absorbing, sound-insulating, and heat-insulating member is formed by the chip mixed body which is formed by dispersively mixing the plurality of semi-closed cell urethane chips, the plurality of open cell urethane chips, and the plurality of fiber chips with the binder in the liquid state of the binder, and then hardening of the binder. Herein, the plurality of semi-closed cell urethane chips are obtained by pulverizing the offcuts of the urethane foam material having the semi-closed cell structure. The plurality of open cell urethane chips are obtained by pulverizing the offcuts of the urethane foam material having the open cell structure. The plurality of fiber chips are obtained by pulverizing the fiber material for discarding.

Thus, for forming the sound-absorbing, sound-insulating, and heat-insulating member, the offcuts of the urethane foam material having the semi-closed cell structure, the offcuts of the urethane foam material having the open cell structure, and the fiber material for discarding can be all effectively used as materials for forming the sound-absorbing, sound-insulating, and heat-insulating member instead of being discarded. As a result, it is possible to favorably prevent an enormous waste of the offcuts of both urethane foam materials as resources and the fiber material for discarding as resources, and considerable economic losses caused by the waste.

In another aspect of the present invention, in the sound-absorbing, sound-insulating, and heat-insulating member according to the above-mentioned invention, the present invention is characterized by the followings.

The plurality of closed-cell urethane chips are formed by pulverizing offcuts, the offcuts being produced from urethane foam material including a closed-cell structure in a process of manufacturing the urethane foam material, and
the plurality of open cell urethane chips are formed by pulverizing offcuts, the offcuts being produced from urethane foam material including an open cell structure in a process of manufacturing the urethane foam material, and the plurality of fiber chips are formed by pulverizing fiber material for discarding.

The chip mixed body is formed by mixing the plurality of closed-cell urethane chips, the plurality of open cell urethane chips, and the plurality of fiber chips dispersively with the binder in a liquid state of the binder, and then under hardening of the binder.

According to this construction, the sound-absorbing, sound-insulating, and heat-insulating member differs in its construction from the sound-absorbing, sound-insulating, and heat-insulating member according to the above mentioned invention only in including the plurality of closed-cell urethane chips obtained by pulverizing the offcuts of the urethane foam material having the closed-cell structure, instead of the plurality of semi-closed cell urethane chips obtained by pulverizing the offcuts of the urethane foam material having the semi-closed cell structure.

Thus, for forming the sound-absorbing, sound-insulating, and heat-insulating member, the offcuts of the urethane foam material having the closed-cell structure, the offcuts of the urethane foam material having the open cell structure, and the fiber material for discarding can be all effectively used as materials for forming the sound-absorbing, sound-insulating, and heat-insulating member without being discarded. As a result, it is possible to favorably prevent an enormous waste of the respective offcuts of both urethane foam materials as resources and the fiber material for discarding as resources and considerable economic losses caused by the waste.

In still another aspect of the present invention, in the sound-absorbing, sound-insulating, and heat-insulating member according to the above-described invention, the present invention is characterized by the followings.

Representing the plurality of semi-closed cell urethane chips and the plurality of open cell urethane chips respectively as a urethane chip, the chip mixed body includes at least one labyrinthine path, the at least one labyrinthine path being formed so as to pass between the urethane chips facing each other among the urethane chips in the binder.

The plurality of fiber chips are dispersively positioned in the at least one labyrinthine

According to such a configuration, in the sound-absorbing, sound-insulating, and heat-insulating member made of the chip mixed body, the at least one labyrinthine path is formed so as to pass between the respective urethane chips opposed to each other among the respective urethane chips, in other words, for example, between the respective semi-closed cell urethane chips opposed to each other, between the respective open cell urethane chips opposed to each other, and between the semi-closed cell urethane chip and the open cell urethane chip opposed to each other. Herein, the plurality of fiber chips are dispersively positioned in the at least one labyrinthine path.

Therefore, when noises entering the sound-absorbing, sound-insulating, and heat-insulating member enter the at least one labyrinthine path, the noises proceed in the at least one labyrinthine path along the labyrinthine shape of the at least one labyrinthine path, while colliding with the plurality of fiber chips dispersively positioned in the at least one labyrinthine path.

In such a process, the noises proceed inside the at least one labyrinthine path while consuming and decreasing the vibrational energy due to frictional contact with the labyrinthine shape of the at least one labyrinthine path, and consuming and decreasing the vibrational energy due to collision with the plurality of fiber chips. This means that the noises can be favorably absorbed due to the frictional contact with the labyrinthine shape of the at least one labyrinthine path and the collision with the plurality of fiber chips in the at least one labyrinthine path. Other operation/work effects are similar to those of the sound-absorbing, sound-insulating, and heat-insulating member according to the present invention described above.

In further aspect of the present invention, in the sound-absorbing, sound-insulating, and heat-insulating member according to the above-described invention, the present invention is characterized by the followings.

Representing the plurality of closed-cell urethane chips and the plurality of open cell urethane chips respectively as an urethane chip, the chip mixed body includes at least one labyrinthine path, the at least one labyrinthine path being formed so as to pass between the urethane chips facing each other among the urethane chips in the binder.

The plurality of fiber chips are dispersively positioned in the at least one labyrinthine path.

According to such a configuration, the sound-absorbing, sound-insulating, and heat-insulating member differs at its construction from the sound-absorbing, sound-insulating, and heat-insulating member according to the above mentioned invention, only in that the plurality of closed-cell urethane chips and the plurality of open cell urethane chips are replaced respectively by the urethane chip instead of each of the plurality of semi-closed cell urethane chips and the plurality of open cell urethane chips.

Therefore, although configured in this way, noises entering the at least one labyrinthine path can be favorably absorbed due to the frictional contact with the labyrinthine shape of the at least one labyrinthine path and the collision with the plurality of fiber chips in the at least one labyrinthine path, similar to the above. Other operation/work effects are similar to those of the sound-absorbing, sound-insulating, and heat-insulating member according to the present invention described above.

In still further aspect of the present invention, in the sound-absorbing, sound-insulating, and heat-insulating member according to the above-described invention, the present invention comprises a non-air permeable layer. The chip mixed body is formed to be layered, and the non-air permeable layer is stacked on the layered chip mixed body.

According to such a configuration, the non-air permeable layer stacked on the layered chip mixed body has sound insulation performance. Therefore, when noises enter the non-air permeable layer, the noises enter the chip mixed body while being insulated by the non-air permeable layer on the basis of the sound insulation performance of the non-air permeable layer.

Herein, the chip mixed body is formed at its at least one labyrinthine path so as to pass between the respective urethane chips opposed to each other among the respective urethane chips, in other words, for example, between the respective semi-closed cell urethane chips opposed to each other, between the respective open cell urethane chips opposed to each other, and between the semi-closed cell urethane chip and the open cell urethane chip opposed to each other, as described above. In addition, the plurality of fiber chips are dispersively positioned in the at least one labyrinthine path, as described above.

Therefore, when noises entering the chip mixed body from the non-air permeable layer enters the at least one labyrinthine path of the chip mixed body, the noises proceed inside the at least one labyrinthine path along the labyrinthine shape of the at least one labyrinthine path, while colliding with the plurality of fiber chips positioned dispersively in the at least one labyrinthine path.

In such a process, the noises proceed inside the at least one labyrinthine path while consuming and decreasing the vibrational energy due to frictional contact with the labyrinthine shape of the at least one labyrinthine path, and consuming and decreasing the vibrational energy due to the collision with the plurality of fiber chips. This results in that the noises can be favorably absorbed due to the frictional contact with the labyrinthine shape of the at least one labyrinthine path and the collision with the plurality of fiber chips in the at least one labyrinthine path.

In this way, the noises entering the non-air permeable layer can be favorably insulated and absorbed on the basis of the sound insulation performance of the non-air permeable layer and the sound absorption performances of the labyrinthine-like shape of the at least one labyrinthine path of the chip mixed body and the plurality of fiber chips. Other operation/work effects are similar to those of the sound-absorbing, sound-insulating, and heat-insulating member according to the present invention described above.

In another aspect of the present invention, a wall member for architecture formed with a tip mixed body according to the present invention is applied to a wall body for architecture.

The wall member for architecture comprises a plurality of semi-closed cell urethane chips, a plurality of open cell urethane chips, a plurality of fiber chips, and a binder.

The plurality of semi-closed cell urethane chips each include a semi-closed cell structure,
the plurality of open cell urethane chips each include an open cell structure, and
the plurality of fiber chips each include at least one of a chip-shaped fiber lump and a chip-shaped fiber fragment.

The tip mixed body is formed by mixing the plurality of semi-closed cell urethane chips, the plurality of open cell urethane chips, and the plurality of fiber chips dispersively with the binder.

According to this construction, it is possible to provide the wall member for architecture achieving operation/work effects similar to those of the sound-absorbing, sound-insulating, and heat-insulating member made of the chip mixed body according to the present invention described above.

In another aspect of the present invention, a wall member for architecture formed with a tip mixed body according to the present invention is applied to a wall body for architecture.

The wall member for architecture comprises a plurality of closed-cell urethane chips, a plurality of open cell urethane chips, a plurality of fiber chips, and a binder.

The plurality of closed-cell urethane chips each include a closed-cell structure,
the plurality of open cell urethane chips each include an open cell structure, and
the plurality of fiber chips each include at least one of a chip-shaped fiber lump and a chip-shaped fiber fragment.

The tip mixed body is formed by mixing the plurality of closed-cell urethane chips, the plurality of open cell urethane chips, and the plurality of fiber chips dispersively with the binder.

According to this construction, it is possible to provide the wall member for architecture achieving operation/work effects similar to those of the sound-absorbing, sound-insulating, and heat-insulating member made of the chip mixed body according to the present invention described above.

In still another aspect of the present invention, the present invention comprises a plurality of closed-cell urethane chips in the wall member for architecture according to the above-mentioned invention.

The plurality of closed-cell urethane chips each include a closed-cell structure.

The tip mixed body is formed by mixing the plurality of closed-cell urethane chips, the plurality of semi-closed cell urethane chips, the plurality of open cell urethane chips, and the plurality of fiber chips dispersively with the binder.

According to this construction, it is possible to provide the wall member for architecture achieving operation/work effects similar to those of the sound-absorbing, sound-insulating, and heat-insulating member made of the chip mixed body according to the present invention described above.

In further aspect of the present invention, in the wall member for architecture according to the above-described invention, the present invention is characterized by the followings.

Representing the plurality of semi-closed cell urethane chips and the plurality of open cell urethane chips respectively as a urethane chip, the chip mixed body includes at least one labyrinthine path, the at least one labyrinthine path being formed so as to pass between the urethane chips facing each other among the urethane chips in the binder.

The plurality of fiber chips are dispersively positioned in the at least one labyrinthine path.

According to this construction, it is possible to provide the wall member for architecture achieving operation/work effects similar to those of the sound-absorbing, sound-insulating, and heat-insulating member made of the chip mixed body according to the present invention described above.

In still further aspect of the present invention, in the wall member for architecture according to the above-described invention, the present invention is characterized by the followings.

Representing the plurality of closed-cell urethane chips and the plurality of open cell urethane chips respectively as a urethane chip, the chip mixed body includes at least one labyrinthine path, the at least one labyrinthine path being formed so as to pass between the urethane chips facing each other among the urethane chips in the binder.

The plurality of fiber chips are dispersively positioned in the at least one labyrinthine path.

According to this construction, it is possible to provide the wall member for architecture achieving operation/work effects similar to those of the sound-absorbing, sound-insulating, and heat-insulating member made of the chip mixed body according to the present invention described above.

In still further aspect of the present invention, the present invention comprises a non-air permeable layer in the wall member for architecture according to the above-mentioned invention.

The chip mixed body is formed to be layered, and
the non-air permeable layer is stacked on the layered chip mixed body.

According to such a configuration, it is possible to provide the wall member for architecture achieving operation/work effects similar to those of the sound-absorbing, sound-insulating, and heat-insulating member made of the chip mixed body according to the present invention described above.

In still further aspect of the present invention, a roof silencer for a motor vehicle formed with a chip mixed body is stacked between outer and inner plates forming a roof of the motor vehicle so as to face a vehicle compartment of the motor vehicle through the inner plate.

The roof silencer comprises a plurality of semi-closed cell urethane chips, a plurality of open cell urethane chips, a plurality of fiber chips, and a binder.

The plurality of semi-closed cell urethane chips each include a semi-closed cell structure,
the plurality of open cell urethane chips each include an open cell structure, and
the plurality of fiber chips each include at least one of a chip-shaped fiber lump and a chip-shaped fiber fragment,

The chip mixed body is formed by mixing the plurality of semi-closed cell urethane chips, the plurality of open cell urethane chips, and the plurality of fiber chips dispersively with the binder.

According to the present invention, it is possible to provide the roof silencer for a motor vehicle achieving operation/work effects similar to those of the sound-absorbing, sound-insulating, and heat-insulating member according to the present invention described above.

In still further aspect of the present invention, a roof silencer for a motor vehicle formed with a chip mixed body is stacked between outer and inner plates forming a roof of the motor vehicle so as to face a vehicle compartment of the motor vehicle through the inner plate.

The roof silencer comprises a plurality of closed-cell urethane chips, a plurality of open cell urethane chips, a plurality of fiber chips, and a binder.

The plurality of closed-cell urethane chips each include a closed-cell structure,
the plurality of open cell urethane chips each include an open cell structure, and
the plurality of fiber chips each include at least one of a chip-shaped fiber lump and a chip-shaped fiber fragment.

The chip mixed body is formed by mixing the plurality of closed-cell urethane chips, the plurality of open cell urethane chips, and the plurality of fiber chips dispersively with the binder.

According to the present invention, it is possible to provide the roof silencer for a motor vehicle achieving operation/work effects similar to those of the sound-absorbing, sound-insulating, and heat-insulating member according to the present invention described above.

In still another aspect of the present invention, in the roof silencer for a motor vehicle described above, the present invention is characterized by the followings.

Representing the plurality of semi-closed cell urethane chips and the plurality of open cell urethane chips respectively as a urethane chip, the chip mixed body includes at least one labyrinthine path, the at least one labyrinthine path being formed so as to pass between the urethane chips facing each other among the urethane chips in the binder.

The plurality of fiber chips are dispersively positioned in the at least one labyrinthine path.

According to the present invention, it is possible to provide the roof silencer for a motor vehicle achieving operation/work effects similar to those of the sound-absorbing, sound-insulating, and heat-insulating member according to the present invention described above.

In still another aspect of the present invention, the present invention is characterized by the followings in the roof silencer for a motor vehicle according to the above-mentioned invention.

Representing the plurality of closed-cell urethane chips and the plurality of open cell urethane chips respectively as a urethane chip, the chip mixed body includes at least one labyrinthine path, the at least one labyrinthine path being formed so as to pass between the urethane chips facing each other among the urethane chips in the binder.

The plurality of fiber chips are dispersively positioned in the at least one labyrinthine path.

According to the present invention, it is possible to provide the roof silencer for a motor vehicle achieving operation/work effects similar to those of the sound-absorbing, sound-insulating, and heat-insulating member according to the present invention described above.

Other features and advantages of the present invention will be apparent from the following description taken in connection with the accompanying drawings.
FIG. 1 is a plan view illustrating a first embodiment of a sound-absorbing, sound-insulating, and heat-insulating member according to the present invention.
FIG. 2 is a bottom view illustrating the sound-absorbing, sound-insulating, and heat-insulating member in FIG. 1.
FIG. 3 is a partial enlarged sectional view of the sound-absorbing, sound-insulating, and heat-insulating member in FIG. 1.
FIG. 4 is graphs illustrating respectively a relationship between a sound absorption coefficient with a frequency each of a working sample and a comparative sample in the first embodiment.
FIG. 5 is graphs illustrating respectively a relationship between a transmission loss with a frequency in each of the working sample, the comparative sample, and an iron plate in the first embodiment.
FIG. 6 is a graph illustrating a relationship between a sound absorption coefficient of a working sample and a mixing ratio of open cell urethane chips in the first embodiment.
FIG. 7 is a graph illustrating a relationship between a thermal conductivity of a working sample and a mixing ratio of a semi-closed cell urethane chip in the first embodiment.
FIG. 8 is a bottom view illustrating a second embodiment of the sound-absorbing, sound-insulating, and heat-insulating member according to the present invention.
FIG. 9 is a graph illustrating a relationship between a transmission loss of a working sample and a mixing ratio of fiber chips in the second embodiment.
FIG. 10 is a partially cutaway front view illustrating a wall member for architecture according to the present invention as a third embodiment.
FIG. 11 is a longitudinal sectional view taken along a line 11-11 in FIG. 10.
FIG. 12 is a partially cutaway longitudinal sectional view illustrating a wall member for architecture according to the present invention as a fourth embodiment.
FIG. 13 is a schematic partially cutaway outline side view of a motor vehicle to which a roof silencer according to the present invention is applied as a fifth embodiment.
FIG. 14 is a partially cutaway plan view illustrating a roof panel of the motor vehicle including the roof silencer illustrated in FIG. 13.
FIG. 15 is a longitudinal sectional view taken along a line 15-15 in FIG. 14.
FIG. 16 is a partial enlarged sectional view illustrating the roof silencer stacked in a roof illustrated in FIG. 15.
FIG. 17 is a plan view illustrating the roof silencer in FIG. 15.
FIG. 18 is a longitudinal sectional view taken along a line 18-18 in FIG. 17.

Hereinafter, each of embodiments of the present invention will be described below, referring to the attached drawings.

### (FIRST EMBODIMENT)

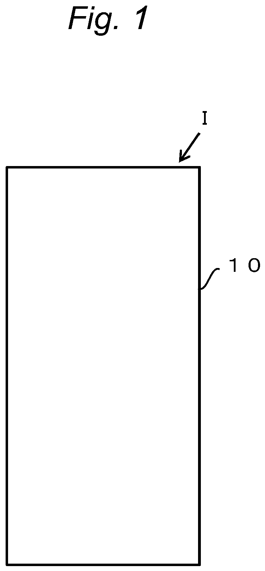

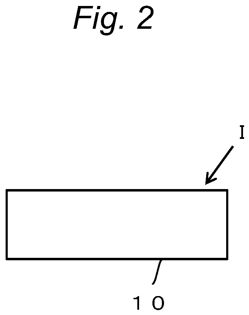

FIG. 1 illustrates a first embodiment of the present invention. FIG. 1 illustrates a sound-absorbing, sound-insulating, and heat-insulating member I according to the present invention. As illustrated in FIGS. 1 and 2, the sound-absorbing, sound-insulating, and heat-insulating member I is formed by a mixed body 10 of a rectangular plate shape.

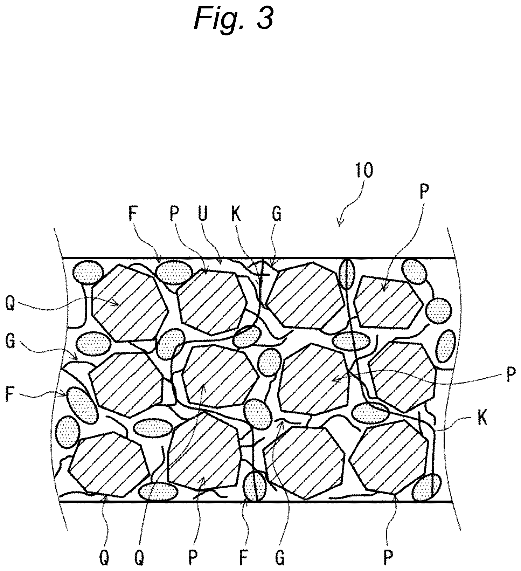

The mixed body 10 includes, as shown in FIG. 3, a plurality of urethane chips P, a plurality of urethane chips Q, a plurality of chip-shaped fiber lumps F, a plurality of chip-shaped fiber pieces G, and a binder U. As described below, the mixed body 10 is formed by stirring and mixing the plurality of urethane chips P, the plurality of urethane chips Q, the plurality of chip-shaped fiber lumps F, and the plurality of chip-shaped fiber pieces G together with the binder U in a liquid state of the binder U at ordinary temperature, and then by hardening of the binder U under heating.

The plurality of urethane chips P are respectively formed by pulverizing offcuts of urethane foam material (referred to as semi-closed cell urethane material below) having a cellular structure (referred to as a semi-closed cell structure below) including a plurality of semi-closed cells. In addition, the urethane chip P is hereinafter referred to as a semi-closed cell urethane chip P.

The plurality of urethane chips Q are respectively formed by pulverizing offcuts of urethane foam material (referred to as open cell urethane material below) having a cellular structure (referred to as an open cell structure below) including a plurality of open cells. In addition, the urethane chip Q is hereinafter referred to as an open cell urethane chip Q below.

As described below, the plurality of chip-shaped fiber lumps F and the plurality of chip-shaped fiber pieces G are formed by pulverizing fiber material. The plurality of these chip-shaped fiber lumps F and the plurality of these chip-shaped fiber pieces G may be grasped as a plurality of fiber chips as a whole. Alternatively, the plurality of chip-shaped fiber lumps F or the plurality of chip-shaped fiber pieces G may be grasped as a plurality of fiber chips. Accordingly, the mixed body 10 will also be referred to as a chip mixed body 10 below. In addition, the binder U is formed by a type of thermosetting resin, for example, urethane.

In the mixed body constituted in this way, the grounds will be described for adopting the semi-closed cell urethane chips P, the open cell urethane chips Q, the chip-shaped fiber lumps F, and the chip-shaped fiber pieces G.

In a process of manufacturing semi-closed cell urethane material, the cutting, trimming, and the like of the semi-closed cell urethane material produce a large number of offcuts (also referred to as semi-closed cell urethane offcuts below). Also in a process of manufacturing open cell urethane material, the cutting, trimming, and the like of the open cell urethane material produce a large number of offcuts (also referred to as open cell urethane offcuts below).

A large number of semi-closed cell urethane offcuts or open cell urethane offcuts produced in this way have conventionally tended to be discarded as it is. However, discarding the semi-closed cell urethane offcuts or the open cell urethane offcuts lead to not only an enormous waste of resources, but also considerable economic losses.

For this reason, it is requested in recent years to reuse the semi-closed cell urethane offcuts or the open cell urethane offcuts.

Accordingly, the present inventors have first studied the performances of open cell urethane material which is widely used, taking it into consideration that, for example, wall members used in architecture or parts used in motor vehicles tend to be required to exhibit all the functions of sound absorption, sound insulation, and heat insulation, as explained at the beginning of the present specification.

When the shape of the open cell urethane material is, for example, a plate shape, the plurality of open cells have respectively a configuration in which a plurality of cells are continuously connected from one opposed surface of the two opposed surfaces of the plate-shaped open cell urethane material to the other opposed surface inside the plate-shaped open cell urethane material.

This means that the respective open cells communicate with each other from one opposed surface of the two opposed surfaces of the plate-shaped open cell urethane material to the other opposed surface through the inside of the plate-shaped open cell urethane material. It is therefore possible that sounds or heat incident on the one opposed surface of the plate-shaped open cell urethane material exit from the other opposed surface of the open cell urethane material through the respective open cells in the open cell urethane material along with air.

Thus, the sounds incident on the open cell urethane material from the one opposed surface of the open cell urethane material pass through each of the open cells while consuming vibrational energy due to frictional contact with the inner peripheral surface of each of the open cells. This means that the open cell urethane material has an open cell structure having an open cell shape suitable to exhibit favorable sound absorption performance for sounds but lacks sound insulation performance. Further, heat passes through the inside of each of the open cells along with air, as described above. Thus, the open cell urethane material lacks heat insulation performance.

According to the above, the open cell urethane material has favorable sound absorption performance attributed to the open cell shape of the open cell structure of the open cell urethane material but has no sound insulation performance and no heat insulation performance. The inventors of the present invention thus have recognized that the open cell urethane material is insufficient as material for forming wall members for architecture or parts for a motor vehicle which is requested to have sound absorption performance, sound insulation performance, and heat insulation performance. In response to this matter, the present inventors have studied various materials each having sound insulation performance and heat insulation performance. As a result, the present inventors have found that a semi-closed cell urethane material can exhibit sound insulation performance and heat insulation performance.

This point will be described in detail. When the shape of the semi-closed cell urethane material is, for example, a plate shape, the plurality of respective semi-closed cells only partially have a configuration in which a plurality of cells are continuously connected inside the plate-shaped semi-closed cell urethane material. Thus, the plurality of semi-closed cells are respectively opened toward the outside from the plate-shaped semi-closed cell urethane material by a cell located on the side of one surface of the plate-shaped semi-closed cell urethane material, but the plurality of semi-closed cells are respectively confined inside the plate-shaped semi-closed cell urethane material by a cell located on the side of the other surface of the plate-shaped semi-closed cell urethane material.

Therefore, the plurality of semi-closed cells are respectively not opened from the side of the other surface of the plate-shaped semi-closed cell urethane material, even if the plurality of semi-closed cells are respectively opened toward the outside from the side of the one surface of the plate-shaped semi-closed cell urethane material. In other words, the respective semi-closed cells do not communicate from the one surface of the plate-shaped semi-closed cell urethane material to the other surface.

This means that the plate-shaped semi-closed cell urethane material has a cellular structure (semi-closed cell structure) made of a cellular shape which makes it almost impossible for sounds or heat to pass through the plate-shaped semi-closed cell urethane material. In other words, the plate-shaped semi-closed cell urethane material mainly exhibits sound insulation performance for sounds. Meanwhile, it is thus recognized that the semi-closed cell urethane material has favorable heat insulation performance, because it is not possible for heat to pass through the respective semi-closed cells, as described above.

According to the above, the semi-closed cell urethane material has mainly sound insulation performance and heat insulation performance. Thus, the present inventors have recognized that the semi-closed cell urethane material is effective, in combination with the open cell urethane material described above, as material for forming a wall member for architecture or a part for a motor vehicle, for example, a roof silencer for the motor vehicle, which is requested to have sound absorption performance, sound insulation performance, and heat insulation performance.

The inventors of the present invention thus have adopted the above-described offcuts of the open cell urethane material and the above-described offcuts of the semi-closed cell urethane material, which are discarding targets, respectively as raw materials of open cell urethane chips and semi-closed cell urethane chips.

In addition, the open cell urethane material described above includes a plurality of open cells. Therefore, the open cell urethane material has favorable flexibility, but lacks rigidity. Further, as described above, the open cell urethane material has favorable sound absorption performance but is sometimes requested to exhibit still more favorable sound absorption performance.

Herein, the semi-closed cell urethane material described above includes a plurality of semi-closed cells, and is thus harder than open cell urethane material, which includes a plurality of open cells, and has rigidity. However, for example, although open cell urethane chips and semi-closed cell urethane chips alone are stirred and mixed with a binder and formed as a mixed body, it is not possible for the mixed body to exhibit sufficient rigidity even by hardening of the binder.

To address this matter, the present inventors have focused on the presence of fiber material on the basis of the past experience as material that may increase the sound absorption performance and the rigidity.

If the mixed body described above is formed by stirring and mixing chip-shaped fiber lumps and chip-shaped fiber pieces, which are formed by pulverizing fiber material, together with the open cell urethane chips and the semi-closed cell urethane chips, the binder is impregnated with the chip-shaped fiber lumps and the chip-shaped fiber pieces and then securely combined with the chip-shaped fiber lumps and the chip-shaped fiber pieces in the stirred mixed body. This means that the chip-shaped fiber lumps and the chip-shaped fiber pieces may strengthen the combination with the binder and exhibit high rigidity.

Moreover, if old or used clothing for discarding (old clothing that is a discarding target) is used as the fiber material, the waste as resources of old clothing for discarding can be suppressed, and the economic loss caused by the waste of old clothing for discarding can be suppressed, in these days wherein old clothing for discarding tends to be discarded considerably as discarded material.

From the viewpoint as described above, the present inventors have decided to use old clothing material for discarding as raw material of chip-shaped fiber lumps and chip-shaped fiber pieces in this first embodiment. Examples of the old clothing material for discarding include clothing made of fiber such as garments manufactured by clothing manufacturers and worn out to be a discarding target.

Under such a premise, for forming the plurality of semi-closed cell urethane chips P, the plurality of open cell urethane chips Q, the plurality of chip-shaped fiber lumps F, and the plurality of chip-shaped fiber pieces G, semi-closed cell urethane offcuts, open cell urethane offcuts, and old clothing material serving as fiber material are prepared.

As described above, offcuts produced in the process of manufacturing semi-closed cell urethane material are adopted as the semi-closed cell urethane offcuts. As described above, offcuts produced in the process of manufacturing open cell urethane material are adopted as the open cell urethane offcuts.

The plurality of semi-closed cell urethane offcuts are pulverized by a pulverizer (not illustrated) and formed as the plurality of semi-closed cell urethane chips P. The plurality of semi-closed cell urethane chips P each have, for example, a size within a range of 2 mm to 50 mm. In addition, due to the nature of pulverization by the pulverizer, each of the plurality of semi-closed cell urethane chips P does not have a constant chip shape but has a variety of chip shapes.

The plurality of open cell urethane chips Q are also formed as follows. The plurality of open cell urethane offcuts are pulverized by the pulverizer described above and formed as the plurality of open cell urethane chips Q. The plurality of open cell urethane chips Q each have, for example, a size within a range of 2 mm to 50 mm as with the plurality of semi-closed cell urethane chips P described above. In addition, due to the nature of pulverization by the pulverizer, the shape of each of the plurality of open cell urethane chips Q is not a constant chip shape, but is a variety of chip shapes, as with the plurality of semi-closed cell urethane chips P described above.

Furthermore, the plurality of chip-shaped fiber lumps F and the plurality of chip-shaped fiber pieces G are formed as follows. The prepared old clothing material is first crushed by the crusher described above and formed as a plurality of crushed old clothing materials (not illustrated). The plurality of crushed old clothing materials each have, for example, a size within a range of 5 mm to 100 mm.

The plurality of crushed old clothing materials are then pulverized by the pulverizer described above and formed as the plurality of chip-shaped fiber lumps F and the plurality of chip-shaped fiber pieces G. The plurality of chip-shaped fiber lumps F each have, for example, a size within a range of 1 mm to 20 mm. In addition, due to pulverization by the pulverizer, the shape of each of the plurality of chip-shaped fiber lumps F is not a constant chip shape, but is a variety of chip shapes, as with the plurality of semi-closed cell urethane chips P described above. In addition, the plurality of chip-shaped fiber pieces G each have a length within a range of 5 mm to 20 mm.

Furthermore, the respective weights of the plurality of semi-closed cell urethane chips P, the plurality of open cell urethane chips Q, the plurality of chip-shaped fiber lumps F, and the plurality of chip-shaped fiber pieces G included in the chip mixed body 10 are set as follows.

The weights of the plurality of semi-closed cell urethane chips P and the plurality of open cell urethane chips Q are respectively set at 20wt% and 40wt%. In addition, the plurality of chip-shaped fiber lumps F and the plurality of chip-shaped fiber pieces G are all formed by being pulverized as described above. Thus, the plurality of chip-shaped fiber lumps F and the plurality of chip-shaped fiber pieces G are grasped as a plurality of fiber chips as a whole. The weight of the plurality of fiber chips (the overall weight of the plurality of chip-shaped fiber lumps F and the plurality of chip-shaped fiber pieces G) is accordingly set at 30wt%. In addition, the weight of the binder U is set at 10wt%.

According to the above, the mixing ratios of the semi-closed cell urethane chips P, the open cell urethane chips Q, the chip-shaped fiber lumps F, and the fiber chips (the chip-shaped fiber lumps F and the chip-shaped fiber pieces G) in the chip mixed body 10 are respectively 20wt%, 40wt%, 30wt%, and 10wt%.

In the chip mixed body 10, the plurality of semi-closed cell urethane chips P, the plurality of open cell urethane chips Q, the plurality of chip-shaped fiber lumps F, and the plurality of chip-shaped fiber pieces G are dispersively positioned in the binder U (see FIG. 3). Accordingly, a plurality of paths K are formed respectively in a labyrinthine shape so as to pass between both the semi-closed cell urethane chips P facing each other, between both the open cell urethane chips Q facing each other, and between the semi-closed cell urethane chip P and the open cell urethane chip Q facing each other from the lower surface of the chip mixed body 10 of FIG.3 to the upper surface of the chip mixed body 10 in the binder U. In addition, the plurality of chip-shaped fiber lumps F and the plurality of chip-shaped fiber pieces G are dispersed and positioned in the plurality of paths K (referred to as labyrinthine paths K below).

The chip mixed body 10 configured as described above is manufactured as follows by using the plurality of semi-closed cell urethane chips P, the plurality of open cell urethane chips Q, the plurality of chip-shaped fiber lumps F, the plurality of chip-shaped fiber pieces G, and the binder U formed respectively as described above.

The semi-closed cell urethane chips P, the plurality of open cell urethane chips Q, the plurality of chip-shaped fiber lumps F, and the plurality of chip-shaped fiber pieces G are put into a stirring machine (not illustrated) at ordinary temperature along with the binder U in the liquid state of the binder U. The semi-closed cell urethane chips P, the plurality of open cell urethane chips Q, the plurality of chip-shaped fiber lumps F, and the plurality of chip-shaped fiber pieces G which are put in this way are stirred and dispersively mixed in the binder U by the stirring machine and the binder U is further hardened under heating to form a mixed body. It is to be noted that the mixed body is formed to have a shape in which the plurality of open cell urethane chips Q, the plurality of chip-shaped fiber lumps F, and the plurality of chip-shaped fiber pieces G are evenly dispersed in the binder U.

The mixed body formed as described above is then put between an upper die and a lower die of a press die (not illustrated). When the mixed body is put into the above-mentioned press die in this way, the mixed body is press-molded to have a predetermined rectangular-plate shape matching the external shape of the chip mixed body 10 by the upper die descending toward the lower die with steam sprayed over the region between the upper die and the lower die of the press die from a steam generator (not illustrated). In this way, the chip mixed body 10 configured as described above is manufactured.

In the first embodiment configured as described above, the chip mixed body 10, in other words, the sound-absorbing, sound-insulating, and heat-insulating member I is formed in its construction to exhibit favorably sound absorption performance and sound insulation performance for sounds (noises) in addition to heat insulation performance for heat.
(1) The sound-absorbing, sound-insulating, and heat-insulating member I is, as shown in FIG. 3, formed to have a configuration in which the plurality of semi-closed cell urethane chips P, the plurality of open cell urethane chips Q, the plurality of chip-shaped fiber lumps F, and the plurality of chip-shaped fiber pieces G are evenly dispersed in the hardened binder U.
(2) The plurality of open cell urethane chips Q have a configuration in which sound absorption performance is favorably exhibited on the basis of the plurality of open cells of the open cell urethane chip Q. In addition, the plurality of semi-closed cell urethane chips P have a configuration in which sound insulation performance and heat insulation performance are chiefly exhibited favorably on the basis of the plurality of semi-closed cells of the semi-closed cell urethane chip P.
(3) The plurality of chip-shaped fiber lumps F and the plurality of chip-shaped fiber pieces G are dispersed and positioned in the plurality of labyrinthine paths K under each fiber structure of the plurality of chip-shaped fiber lumps F and the plurality of chip-shaped fiber pieces G, thereby to assist the sound absorption performance of each of the plurality of open cell urethane chips Q. Thus, the plurality of chip-shaped fiber lumps F and the plurality of chip-shaped fiber pieces G play a role to further improve the sound absorption performance as the sound-absorbing, sound-insulating, and heat-insulating member I.
(4) In a process of stirring and mixing the binder U with the plurality of semi-closed cell urethane chips P, the plurality of open cell urethane chips Q, the plurality of chip-shaped fiber lumps F, and the plurality of chip-shaped fiber pieces G, the binder U hardens while positioning the respective semi-closed cell urethane chips P, the respective open cell urethane chips Q, the respective chip-shaped fiber lumps F, and the respective chip-shaped fiber pieces G in a dispersed manner. Herein, the binder U is partially impregnated into the respective chip-shaped fiber lumps F and the respective chip-shaped fiber pieces G and is hardened.

Therefore, the plurality of chip-shaped fiber lumps F and the plurality of chip-shaped fiber pieces G strengthen with each of their fiber structures each combination between both the adjacent semi-closed cell urethane chips P, between both the adjacent open cell urethane chips Q, and between the semi-closed cell urethane chip P and the open cell urethane chip Q through the binder U under the impregnation of the binder into the plurality of chip-shaped fiber lumps F and the plurality of chip-shaped fiber pieces G and the hardening of the binder U, thereby to play a role in further improving the rigidity as the sound-absorbing, sound-insulating, and heat-insulating member I.

It is assumed that sounds (noises) are then incident on the sound-absorbing, sound-insulating, and heat-insulating member I having a configuration as described above from the upper surface of the sound-absorbing, sound-insulating, and heat-insulating member I.

Herein, the plurality of open cell urethane chips Q are evenly dispersed and positioned in the binder U of the sound-absorbing, sound-insulating, and heat-insulating member I. Therefore, when the noises incident on the sound-absorbing, sound-insulating, and heat-insulating member I from the upper surface thereof as described above are incident on the plurality of open cell urethane chips Q, the noises pass through the insides of open cells of each of the open cell urethane chips Q. In such a passage process, the noises proceed or propagate while consuming vibration energy through frictional contact with the inner peripheral surface of each open cell. This means that the noises are favorably absorbed by the respective open cell urethane chips Q.

In addition, when the noises incident on the sound-absorbing, sound-insulating, and heat-insulating member I from the upper surface thereof as described above enter each inside of the plurality of labyrinthine paths K of the sound-absorbing, sound-insulating, and heat-insulating member I, the noises proceed each inside of the labyrinthine paths K through the respective chip-shaped fiber lumps F and the respective chip-shaped fiber pieces G dispersed and positioned in the respective labyrinthine paths K. In other words, the noises proceed each inside of the labyrinthine paths K while colliding with the respective chip-shaped fiber lumps F and the respective chip-shaped fiber pieces G.

Herein, as is clear from FIG. 3, the plurality of labyrinthine paths K are formed from the upper surface to the lower surface of the sound-absorbing, sound-insulating, and heat-insulating member I to extend like labyrinths between both the adjacent semi-closed cell urethane chips P, between both the adjacent open cell urethane chips Q, between the semi-closed cell urethane chip P and the open cell urethane chip Q adjacent to each other.

The noises thus proceed along the respective labyrinthine paths K while consuming the vibrational energy due to each labyrinthine shape of the labyrinthine paths K and also proceed while consuming the vibrational energy due to collision with the respective chip-shaped fiber lumps F and the respective chip-shaped fiber pieces G in the respective labyrinthine paths K. Accordingly, the noises are absorbed favorably in the respective labyrinthine paths K. This means that the respective chip-shaped fiber lumps F and the respective chip-shaped fiber pieces G in the respective labyrinthine paths K assist the sound absorption performances of the respective open cell urethane chips Q in combination with the labyrinthine shape of each of the labyrinthine paths K, thereby to further improve the sound absorption performance as the sound-absorbing, sound-insulating, and heat-insulating member I.

In short, the noises can be favorably absorbed with the sound absorption performances of the plurality of open cell urethane chips Q in the sound-absorbing, sound-insulating, and heat-insulating member I and absorbed favorably with the sound absorption performances based on both of the plurality of chip-shaped fiber lumps F and the plurality of chip-shaped fiber pieces G, which play a role in assisting the sound absorption performances of the plurality of open cell urethane chips Q, and can be further absorbed still more favorably with the sound absorption performance based on the labyrinthine shapes of each of the labyrinthine paths K.

In addition, when noises incident on the sound-absorbing, sound-insulating, and heat-insulating member I from the upper surface thereof, as described above, enter the plurality of semi-closed cell urethane chips P which are dispersed and positioned in the binder U of the sound-absorbing, sound-insulating, and heat-insulating member I, the noises are prevented by the plurality of semi-closed cell urethane chips P with the respective semi-closed cell structures thereof from passing through the sound-absorbing, sound-insulating, and heat-insulating member I. This means that the noises are favorably insulated by the sound-absorbing, sound-insulating, and heat-insulating member I with the semi-closed cell structure of each of the plurality of semi-closed cell urethane chips P of the sound-absorbing, sound-insulating, and heat-insulating member I.

According to the above, even when noises try to pass through the sound-absorbing, sound-insulating, and heat-insulating member I, as described above, the noises can be favorably absorbed on the basis of the synergetic sound absorption performance of the plurality of open cell urethane chips Q, the plurality of chip-shaped fiber lumps F, and the plurality of chip-shaped fiber pieces G of the sound-absorbing, sound-insulating, and heat-insulating member I, and the labyrinthine shape of each of the labyrinthine paths K, and can be further favorably insulated on the basis of the sound insulation performance of each of the plurality of semi-closed cell urethane chips P of the sound-absorbing, sound-insulating, and heat-insulating member I.

In addition, even when, for example, heat such as solar heat enters the sound-absorbing, sound-insulating, and heat-insulating member I from the upper surface thereof in a hot summer season, the heat can be favorably prevented by the plurality of semi-closed cell urethane chips P of the sound-absorbing, sound-insulating, and heat-insulating member I with the semi-closed cell structure of each of the plurality of semi-closed cell urethane chips P from passing through the sound-absorbing, sound-insulating, and heat-insulating member I. This means that the sound-absorbing, sound-insulating, and heat-insulating member I can exhibit favorable heat insulation performance for the heat such as solar heat on the basis of the semi-closed cell structure of each of the plurality of semi-closed cell urethane chips P.

In addition, the plurality of chip-shaped fiber lumps F and the plurality of chip-shaped fiber pieces G are dispersed and positioned in the respective labyrinthine paths K in the sound-absorbing, sound-insulating, and heat-insulating member I, thereby to be interposed between both the semi-closed cell urethane chips P adjacent to each other, between both the open cell urethane chips Q adjacent to each other, and between the semi-closed cell urethane chip P and the open cell urethane chip Q adjacent to each other. Moreover, the binder U is hardened in the condition impregnated into the plurality of chip-shaped fiber lumps F and the plurality of chip-shaped fiber pieces G, as described above.

Therefore, all the semi-closed cell urethane chips P and all the open cell urethane chips Q can be firmly combined with each other through the binder U by the respective chip-shaped fiber lumps F and the respective chip-shaped fiber pieces G. This means that the sound-absorbing, sound-insulating, and heat-insulating member I is capable of exhibiting favorable elasticity on the basis of the impregnation of the binder U into the plurality of chip-shaped fiber lumps F and the plurality of chip-shaped fiber pieces G and the hardening of the binder U. Thus, the sound-absorbing, sound-insulating, and heat-insulating member I can exhibit favorably sound absorption performance, sound insulation performance, and heat insulation performance, while favorably keeping the original shape on the basis of the favorable elasticity of the sound-absorbing, sound-insulating, and heat-insulating member I.

In short, the sound-absorbing, sound-insulating, and heat-insulating member I is capable of achieving superior operation/working-effects of being able to exhibit all of the sound absorption performance, sound insulation performance, and heat insulation performance with the dispersive structure of the plurality of semi-closed cell urethane chips P, the plurality of open cell urethane chips Q, the plurality of chip-shaped fiber lumps F, and the plurality of chip-shaped fiber pieces G in the binder U.

Incidentally, the sound absorption performance of the sound-absorbing, sound-insulating, and heat-insulating member I according to the first embodiment was measured by a reverberant sound absorption coefficient test. For this measurement, a sample (referred to as a working sample 1 below) having a configuration similar to the configuration of the sound-absorbing, sound-insulating, and heat-insulating member I was prepared. A comparative sample (referred to as a comparative sample 2 below) was also prepared for comparison with the working sample 1. It is to be noted that the comparative sample 2 had a configuration in which the semi-closed cell urethane chips were excluded from the working sample 1 and the weight of the open cell urethane chips was 60wt%. The thickness of the comparative sample 2 was the same as the thickness of the working sample 1.

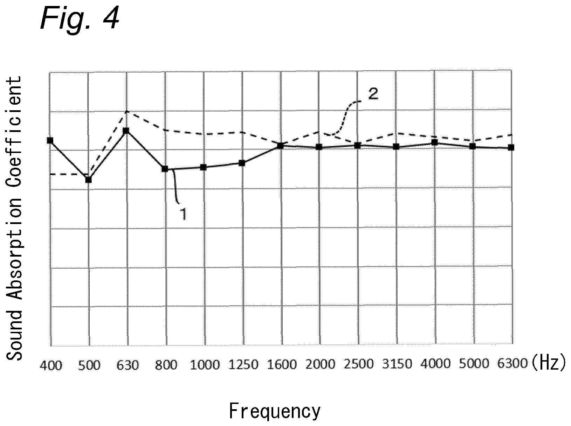

When measuring the sound absorption performance of the working sample 1 by the sound absorption coefficient test described above, a result of the measurement was obtained as a graph 1 shown in FIG. 4. The graph 1 is a graph illustrating the sound absorption coefficient of the working sample 1 in relation to frequency.

Meanwhile, when measuring the sound absorption performance of the comparative sample 2 by the sound absorption coefficient test described above, a result of the measurement was obtained as a graph 2 illustrated in FIG. 4. The graph 2 is a graph illustrating the sound absorption coefficient of the comparative sample 2 in relation to frequency.

Comparing both graphs 1 and 2, it is understood that the sound absorption coefficient of the graph 1 is somewhat inferior to the sound absorption coefficient of the graph 2 in the low and middle frequency bands, that is, a frequency region of 500 Hz or more and less than 1600 Hz, but the sound absorption coefficient of the graph 1 reaches almost 1.0. In addition, it is understood that the sound absorption coefficient of the graph 1 reaches almost 1.0 in a frequency region of 1600 Hz or more and 6300 Hz or less substantially as with the sound absorption coefficient of the graph 2. This means that the working sample 1, in other words, the mixed body 10 has a sound absorption coefficient of almost 1.0 in its sound absorption performance within a frequency region of 500 Hz to 6300 Hz, thereby to be sufficiently practically usable as with the comparative sample 2.

Furthermore, for measuring the sound insulation performance of the chip mixed body 10 of the first embodiment, the transmission loss of the chip mixed body 10 was measured by a transmission loss measurement test. For this measurement, an iron plate (referred to as an iron plate 3 below) having a thickness of 0.8 mm was prepared in addition to the working sample 1 and the comparative sample 2. A sample obtained by stacking the working sample 1 described above on the iron plate 3 was then called a stacked working sample 1a and a sample obtained by stacking the comparative sample 2 described above on the iron plate 3 was called a stacked comparative sample 2a.

Then, the respective transmission losses of the stacked working sample 1a, the stacked comparative sample 2a, and the iron plate 3 were measured by a transmission loss measurement test. In addition, the transmission loss represents sound insulation performance. The transmission loss shows superior sound insulation performance as it grows higher.

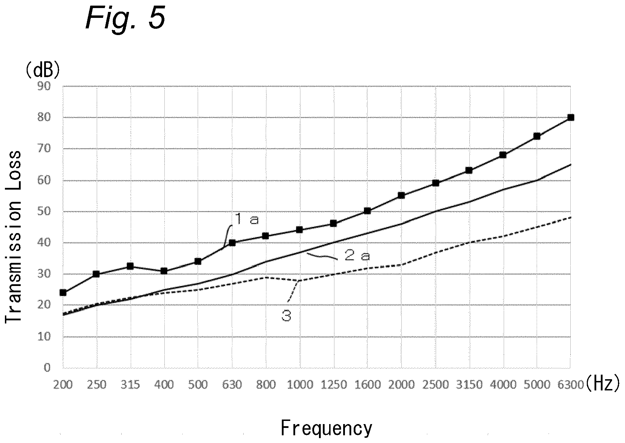

When measuring a transmission loss of the stacked working sample 1a by the transmission loss measurement test, a result of the measurement was as a graph 1a shown in FIG. 5. The graph 1a illustrates the transmission loss of the stacked working sample 1a in relation to frequency.

When measuring then a transmission loss of the stacked comparative sample 2a by the transmission loss measurement test, a result of the measurement was obtained as a graph 2a illustrated in FIG. 5. The graph 2a illustrates the transmission loss of the stacked comparative sample 2a in relation to frequency. When measuring a transmission loss of the iron plate 3 by the transmission loss measurement test, a result of the measurement was obtained as a graph 3 illustrated in FIG. 5. The graph 3 illustrates the transmission loss of the iron plate 3 in relation to frequency.

Comparing the respective graphs 1a, 2a, and 3 each other, it is understood that the transmission loss of the stacked comparative sample 2a is higher than the transmission loss of the iron plate 3 in a frequency region of 200 Hz to 6300 Hz, and that the transmission loss of the stacked working sample 1a is higher than the transmission loss of the stacked comparative sample 2a in a frequency region of 200 Hz to 6300 Hz. It is thus recognized that the stacked working sample 1a, in other words, the mixed body 10 has more favorable sound insulation performance than each sound insulation performance of both the stacked comparative sample 2a and the iron plate 3.

When measuring respective thermal conductivities of the working sample 1 and the comparative sample 2 by a thermal conductivity test, the thermal conductivity of the working sample 1 was a value within a range of 0.039 to 0.041. In addition, the thermal conductivity of the comparative sample 2 was 0.043.

It is thus recognized that the working sample 1, in other words, the chip mixed body 10 has much more favorable thermal conductivity than the thermal conductivity of the comparative sample 2.

According to the above measurement results, it is understood that the working sample 1, in other words, the sound-absorbing, sound-insulating, and heat-insulating member I (the chip mixed body 10) can exhibit sound absorption performance and sound insulation performance substantially similar to them of the comparative sample 2, in addition to exhibiting still more favorable heat insulation performance than the heat insulation performance of the comparative sample 2.

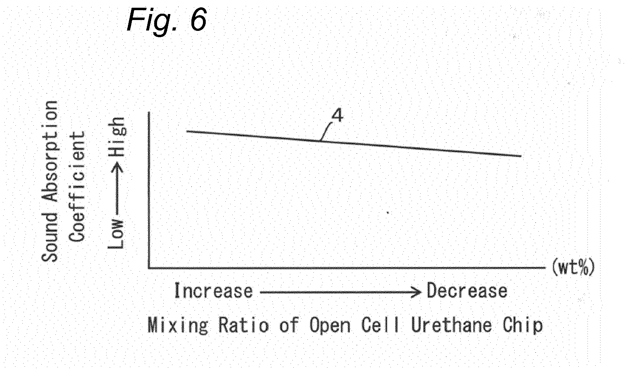

When preparing moreover a plurality of other working samples by changing the mixing ratio of the open cell urethane chips Q in the working sample 1 and measuring sound absorption coefficients of the other respective working samples, as described above, a graph 4 illustrated in FIG. 6 was obtained as a result of the measurement.

By the graph 4, it is understood that the sound absorption coefficient becomes low or high according to increase or decrease of the mixing ratio of the open cell urethane chips. It is to be noted that the mixing ratio of the semi-closed cell urethane chips Q is decreased or increased only the increase or decrease of the mixing ratio of the open cell urethane chips P in each of the working samples.

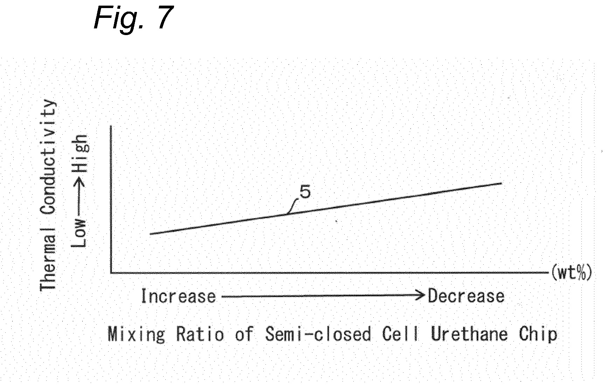

When preparing further a plurality of working samples by changing the mixing ratio of the semi-closed cell urethane chips P in the working sample 1 and measuring thermal conductivity of each of the working samples, as described above, a graph 5 illustrated in FIG. 7 was obtained as a result of the measurement.

By the graph 5, it is understood that the thermal conductivity becomes low or high according to increase or decrease of the mixing ratio of the semi-closed cell urethane chips. It is to be noted that the mixing ratio of the semi-closed cell urethane chips P is decreased or increased only the increase or decrease of the mixing ratio of the open cell urethane chips Q in each of the working samples.

It is thus recognized that the heat insulation performance of the working sample 1, in other words, the sound-absorbing, sound-insulating, and heat-insulating member I becomes higher as the amount of the semi-closed cell urethane chips P included in the sound-absorbing, sound-insulating, and heat-insulating member I grows smaller.

In addition, each of the mixing ratios of the semi-closed cell urethane chips P, the open cell urethane chips Q, and the fiber chips (the chip-shaped fibers G and the chip-shaped fiber pieces G) necessary to maintain the sound absorption performance, the sound insulation performance, and the heat insulation performance of the sound-absorbing, sound-insulating, and heat-insulating member I respectively within a favorable performance range was investigated.

According to the investigation, it is also found that when the weight of the binder U is 10wt%, it is sufficient if the weight of the semi-closed cell urethane chips P is within a predetermined weight range (10wt% to 80wt%), the weight of the open cell urethane chips Q is within a predetermined weight range (10wt% to 80wt%), and the weight of the fiber chips (the chip-shaped fibers G and the chip-shaped fiber pieces G) is within a predetermined weight range (10wt% to 80wt%). It is to be noted that the respective mixing ratios of the semi-closed cell urethane chips P, the open cell urethane chips Q, and the fiber chips (the chip-shaped fibers G and the chip-shaped fiber pieces G) are set to add up to 100wt% as a whole.

### (SECOND EMBODIMENT)

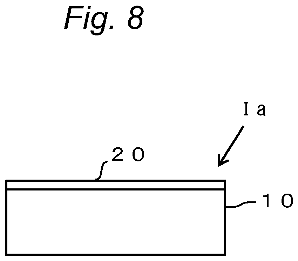

FIG. 8 illustrates a second embodiment of the present invention. FIG. 8 illustrates a sound-absorbing, sound-insulating, and heat-insulating member Ia according to the present invention. The sound-absorbing, sound-insulating, and heat-insulating member Ia includes additionally a non-air permeable layer 20 in addition to the chip mixed body 10 described in the first embodiment above. The non-air permeable layer 20 is formed by, for example, a film layer made of nylon. The non-air permeable layer 20 is bonded to the chip mixed body 10 (sound-absorbing, sound-insulating, and heat-insulating member Ia) along the upper surface of the chip mixed body 10. In addition, the thickness of the film layer described above is, for example, 60 µm. The other construction is similar to that of the first embodiment described above.

In the second embodiment constructed in this way, it is assumed that noises enter the non-air permeable layer 20 of the sound-absorbing, sound-insulating, and heat-insulating member Ia from the upper surface of the non-air permeable layer 20 illustrated in FIG. 8. Herein, the non-air permeable layer 20 has no air permeation performance but has sound insulation performance. The noises incident on the non-air permeable layer 20 from the upper surface of the non-air permeable layer 20 is thus decreased by the non-air permeable layer 20 under the sound insulation performance thereof and then enters the chip mixed body 10 (sound-absorbing, sound-insulating, and heat-insulating member Ia) from the upper surface of the chip mixed body 10.

The noises entering the chip mixed body 10 in this way can be favorably absorbed and insulated by the chip mixed body 10 with the sound absorption performance and the sound insulation performance of the chip mixed body 10 as in the first embodiment described above. Herein, the non-air permeable layer 20 plays a role in assisting the sound insulation performance of the chip mixed body 10 with the sound insulation performance of the non-air permeable layer 20. The noises can be thus insulated still more favorably by the synergetic sound insulation performance of the sound insulation performance of the non-air permeable layer 20 and the sound insulation performance of the chip mixed body 10.

When heat enters also the chip mixed body 10 through the non-air permeable layer 20 of the sound-absorbing, sound-insulating, and heat-insulating member Ia, the heat can be favorably insulated by the chip mixed body 10 (the sound-absorbing, sound-insulating, and heat-insulating member Ia) with the heat insulation performance of the chip mixed body 10 as in the first embodiment described above.

As described above, in this second embodiment, the non-air permeable layer 20 assists the sound insulation performance of the chip mixed body 10, thereby to further improve the sound insulation performance as the sound-absorbing, sound-insulating, and heat-insulating member Ia, and the chip mixed body 10 (the sound-absorbing, sound-insulating, and heat-insulating member Ia) is capable of exhibiting sound absorption performance and heat insulation performance similar to those of the first embodiment described above. The other operation/working-effects are similar to those of the first embodiment described above.

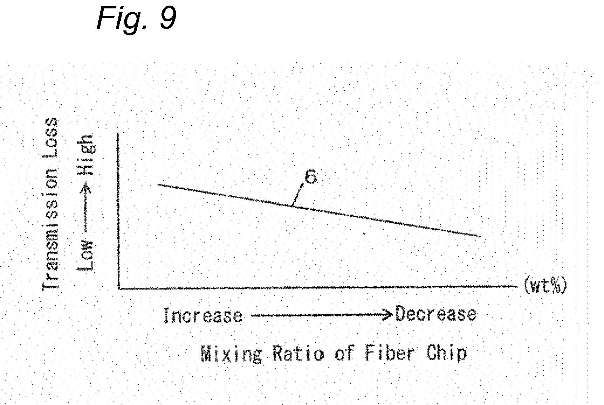

Incidentally, when measuring by a transmittance test how a sound insulation performance of the sound-absorbing, sound-insulating, and heat-insulating member Ia in the second embodiment changes according to increase or decrease of the amount of mixed fiber chips, a result of the measurement was obtained as a graph 6 illustrated in FIG. 9.

By the graph 6, it is recognized that the transmission loss of the sound-absorbing, sound-insulating, and heat-insulating member Ia becomes high according to increase of the mixing ratio of fiber chips, and in contrast, becomes low according to decrease of the mixing ratio of fiber chips.

Herein, the grounds for the exhibition of sound insulation performance by the sound-absorbing, sound-insulating, and heat-insulating member Ia will be described. For forming the chip mixed body 10 of the sound-absorbing, sound-insulating, and heat-insulating member Ia, the binder U is impregnated in the plurality of fiber chips (the plurality of chip-shaped fiber lumps F and the plurality of chip-shaped fiber pieces G) and is then hardened as described in the first embodiment above.

Therefore, each of the fiber chips positioned in the labyrinthine paths K strengthens the combination with the binder U due to increase in density of the binder U, thereby to act so as to prevent movement of noises associated with air in the respective labyrinthine paths K. In other words, the sound-absorbing, sound-insulating, and heat-insulating member Ia also acts to exhibit sound insulation performance for noises with the firm combination of the respective fiber chips in the respective labyrinthine paths K with the binder U, in addition to the sound absorption performance described in the first embodiment above. In addition, the non-air permeable layer 20 has favorable sound insulation performance.

For such a reason, the non-air permeable layer 20 assists the sound insulation performance of the chip mixed body 10 (the sound-absorbing, sound-insulating, and heat-insulating member Ia) , thereby to be capable of allowing the sound-absorbing, sound-insulating, and heat-insulating member Ia to exhibit favorable sound insulation performance. The graph 6 illustrates how such sound insulation performance of the sound-absorbing, sound-insulating, and heat-insulating member Ia changes according to increase or decrease of the mixing ratio of fiber chips.

### (THIRD EMBODIMENT)

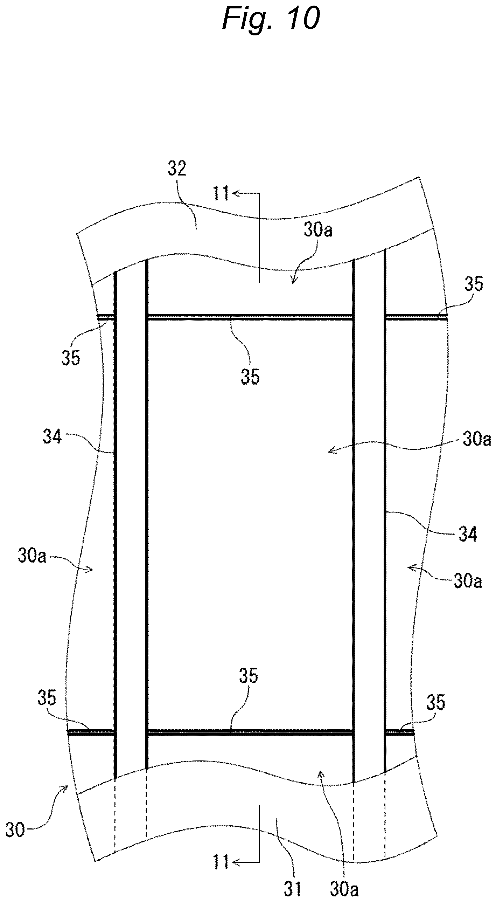

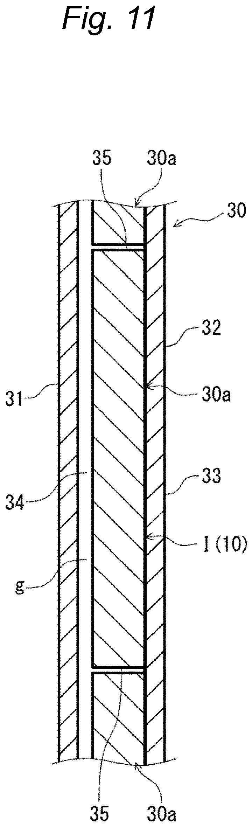

FIGS. 10 and 11 illustrate a third embodiment of the present invention. FIGS. 10 and 11 illustrate an example in which a plurality of middle wall members 30a are applied to a wall body 30 of architecture respectively as a wall member. As illustrated in FIG. 10 or 11, the wall body 30 includes an outer wall member 31 and an inner wall member 32. The inner wall member 32 is opposed to the outer wall member 31 in parallel from the inner side of the outer wall member 31 so as to be positioned to face a spatial region 33 in the architecture described above. It is to be noted that the spatial region 33 is, for example, a room in which a person lives. In addition, for example, a hard board is mentioned as a forming material of each of the outer wall member 31 and the inner wall member 32.

Furthermore, the wall body 30 includes a plurality of vertical columns 34 (only both vertical walls 34 are illustrated in FIG. 10). The plurality of vertical walls 34 are sandwiched between the outer wall member 31 and the inner wall member 32 to stand in parallel with each other at intervals.

The plurality of middle wall members 30a are respectively formed by the chip mixed body 10 (the sound-absorbing, sound-insulating, and heat-insulating member I) described in the first embodiment above. The plurality of middle wall members 30a are respectively fitted into a spatial portion between each of both of the vertical columns 34 adjacent to each other on the left and right sides.

Specifically, the respective middle wall members 30a are fitted into the spatial portion between both the of the left and right vertical columns 34 so as to be positioned in the up-down direction as exemplified in FIG. 10. Each middle wall member 30a is arranged at its surface (a back surface) on the side of the inner wall member 32 so as to be in contact with a surface (an inner surface) of the inner wall member 32 on the side of the outer wall member 31.

This forms an air layer g between the surface (the inner surface) of the outer wall member 31 on the side of the inner wall member 33 or closer to the inner wall member 33 and the surface (front surface) of each middle wall member 30a on the side of the outer wall member 31 or closer to the outer wall member 31. It is to be noted that the width of each vertical column 34 in the left-right direction (the width in the left-right direction illustrated in FIG. 11) has a larger value than the thickness of the sound-absorbing, sound-insulating, and heat-insulating member I so as to form the air layer g. Herein, the air layer g plays a role in enhancing sound absorption performance still more on the basis of the double wall structure of the outer wall member 31 and the middle wall member 30a. It is to be noted that both the middle wall members 30a positioned on both the upper and lower sides are fitted into the spatial portion between both of the left and right vertical columns 34 through a gap 35.

The sound-absorbing, sound-insulating, and heat-insulating member I that forms each middle wall member 30a has resilience as described in the first embodiment above. Thus, each middle wall member 30a is sandwiched securely at both the left and right ends thereof between both of the left and right adjacent vertical columns 34 in an undetachable manner on the basis of the resilience of the middle wall member 30a. It is to be noted that the sound-absorbing, sound-insulating, and heat-insulating member I which forms the middle wall member 30a has sound absorption performance, sound insulation performance, and heat insulation performance as described in the first embodiment above. The other construction is similar to that of the first embodiment described above.

In the third embodiment constructed as described above, when noises enter the wall body 30 from the outer wall member 31 of the wall body 30, the noises enter the middle wall member 30a (the sound-absorbing, sound-insulating, and heat-insulating member I) from the front surface (the surface closer to the outer wall member 31) of the middle wall member 30a. Herein, the outer wall member 31 and the middle wall member 30a form a double wall structure in the wall body 30 through the air layer g. The double wall structure therefore exhibits sound absorption performance on the basis of the spring action of the air layer g accompanied by the entry of the noises described above.

The noises are thus absorbed with the sound absorption performance based on the double wall structure described above and further absorbed on the basis of the synergetic sound absorption performance of the plurality of open cell urethane chips Q, the plurality of chip-shaped fiber lumps F, and the plurality of chip-shaped fiber pieces G of the middle wall member 30a as in the first embodiment described above. This means that the noises can be favorably absorbed with even better superior sound absorption performance including both of the sound absorption performance based on the double wall structure described above and the synergetic sound absorption performance of the middle wall member 30a described above.

The noises absorbed in this way can be further insulated favorably on the basis of the sound insulation performance of the plurality of semi-closed cell urethane chips P of the middle wall member 30a.

Thus, even when there is a resident in the spatial region 33 in the architecture described above, the resident is not put in an uncomfortable environment because of the noises entering the middle wall member 30a, but it is possible secure a comfortable residence feeling.

Even when voices of a speaking resident, sounds from a sound source, or the like in the spatial region 33 of the architecture described above also enter the middle wall member 30a as noises through the inner wall member 32, the noises can be favorably absorbed by the middle wall member 30a with the plurality of open cell urethane chips Q, the labyrinthine shape of each of the plurality of labyrinthine paths K, the plurality of chip-shaped fiber lumps F, and the plurality of chip-shaped fiber pieces G as described above. Thus, the voices or the sounds from the sound source in the spatial region 33 of the architecture described above does not leak from the outer wall member 31 to the outside of the outer wall member 31.

In addition, even when the heat such as solar heat described in the first embodiment above enters the middle wall member 30a through the outer wall member 31, the heat can be favorably insulated by the middle wall member 30a not to enter the spatial region 33 through the inner wall member 32 on the basis of the semi-closed cell structures of the plurality of semi-closed cell urethane chips P of the middle wall member 30a.

This means that the middle wall member 30a which is the sound-absorbing, sound-insulating, and heat-insulating member I is capable of exhibiting favorable heat insulation performance for the heat such as solar heat or the like on the basis of the semi-closed cell structures of the plurality of semi-closed cell urethane chips P. Thus, the comfortable residential environment of the resident in the spatial region 33 of the architecture described above is not impaired by the heat such as solar heat, or the like entering the middle wall member 30a.

In addition, the plurality of chip-shaped fiber lumps F and the plurality of chip-shaped fiber pieces G are dispersed and positioned in the respective labyrinthine paths K in the chip mixed body 10. Therefore, the plurality of chip-shaped fiber lumps F and the plurality of chip-shaped fiber pieces G are interposed between both the semi-closed cell urethane chips P adjacent to each other, between both the open cell urethane chips Q adjacent to each other, and between the semi-closed cell urethane chip P and the open cell urethane chip Q adjacent to each other. Moreover, the binder U is hardened in condition in which it is impregnated into the plurality of chip-shaped fiber lumps F and the plurality of chip-shaped fiber pieces G.

Therefore, all the semi-closed cell urethane chips P and all the open cell urethane chips Q can be firmly combined with each other through the binder U by the respective chip-shaped fiber lumps F and the respective chip-shaped fiber pieces G. This means that the chip mixed body 10 exhibits favorable elasticity on the basis of the impregnation of the binder U with the plurality of chip-shaped fiber lumps F and the plurality of chip-shaped fiber pieces G and the hardening of the binder U. Therefore, the middle wall member 30a that is the sound-absorbing, sound-insulating, and heat-insulating member I can favorably maintain the original shape on the basis of the favorable elasticity of the middle wall member 30a. The other operation/working-effects are similar to those of the first embodiment described above.

### (FOURTH EMBODIMENT)

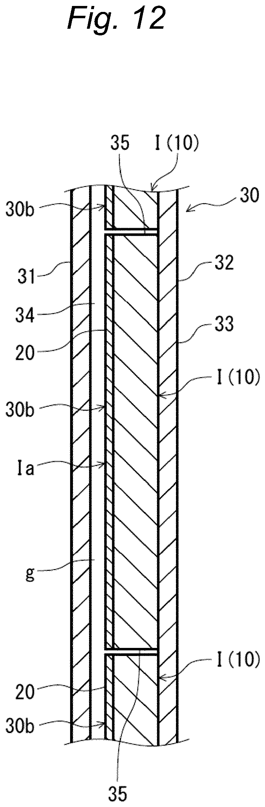

FIG. 12 illustrates the main portion of a fourth embodiment of the present invention. The fourth embodiment has a configuration in which a plurality of middle wall members 30b are adopted for the third embodiment described above instead of the plurality of middle wall members 30a.

As illustrated in FIG. 12, the plurality of middle wall members 30b are fitted into the spatial portion between each of both of the vertical columns 34 adjacent to each other on the left and right as with the middle wall members 30a described in the first embodiment above. The plurality of middle wall members 30b are respectively formed by the sound-absorbing, sound-insulating, and heat-insulating member Ia (see FIG. 8) described in the second embodiment above.

Herein, each sound-absorbing, sound-insulating, and heat-insulating member Ia includes the sound-absorbing, sound-insulating, and heat-insulating member I including the chip mixed body 10 described in the first embodiment above and the non-air permeable layer 20 stacked on the sound-absorbing, sound-insulating, and heat-insulating member I as described in the second embodiment above. Each sound-absorbing, sound-insulating, and heat-insulating member Ia is designed to abut on the inner surface of the inner wall member 32 at the surface (back surface) of each sound-absorbing, sound-insulating, and heat-insulating member Ia closer to the inner wall member 33.

In addition, the non-air permeable layer 20 is bonded to the sound-absorbing, sound-insulating, and heat-insulating member I along the front surface (the surface closer to the outer wall member 31) of the sound-absorbing, sound-insulating, and heat-insulating member I between the outer wall member 31 and the sound-absorbing, sound-insulating, and heat-insulating member I (the mixed body 10). This causes the non-air permeable layer 20 to face the outer wall member 31 through the air layer g. The other construction is similar to that of the second or third embodiment described above.

In the fourth embodiment configured in this way, when noises enter the wall body 30 from the outer wall member 31 thereof, the noises enter the middle wall member 30b (sound-absorbing, sound-insulating, and heat-insulating member Ia) from the non-air permeable layer 20 of the middle wall member 30b. Herein, the outer wall member 31 and the middle wall member 30b form a double wall structure in the wall body 30 through the air layer g. The double wall structure therefore exhibits sound absorption performance on the basis of the spring action of the air layer g accompanied by the entry of the noises described above.

In addition, noises incident on the non-air permeable layer 20 is decreased by the non-air permeable layer 20 on the basis of the sound insulation performance of the non-air permeable layer 20 and enter the sound-absorbing, sound-insulating, and heat-insulating member I (the chip mixed body 10) of the middle wall member 30b. The noises incident on the sound-absorbing, sound-insulating, and heat-insulating member I in such a way can be absorbed still more favorably with both of the sound absorption performance based on the double wall structure including the outer wall member 31 and the sound-absorbing, sound-insulating, and heat-insulating member Ia described above and the sound absorption performance of the sound-absorbing, sound-insulating, and heat-insulating member I similar to that of the first embodiment described above.

In addition, the noises incident on the sound-absorbing, sound-insulating, and heat-insulating member I as described above can be insulated synergistically with the respective sound insulation performances of the non-air permeable layer 20 and the sound-absorbing, sound-insulating, and heat-insulating member I (the chip mixed body 10) as described above. The noises entering the sound-absorbing, sound-insulating, and heat-insulating member Ia can be thus insulated still more favorably than in the third embodiment described above with the sound insulation performance of the sound-absorbing, sound-insulating, and heat-insulating member Ia (the synergetic sound insulation performance of the fiber chips and the non-air permeable layer 20) described above.

As described above, even when noises enter the wall body 30 including the middle wall member 30b from the outer wall member 31, the noises are favorably absorbed and insulated by both of the double wall structure including the outer wall member 31 and the sound-absorbing, sound-insulating, and heat-insulating member Ia described above, and the sound-absorbing, sound-insulating, and heat-insulating member Ia. A resident in the spatial region 33 of the architecture does not thus feel uncomfortable because of the noises.

In addition, when heat enters the sound-absorbing, sound-insulating, and heat-insulating member I through the non-air permeable layer 20, the heat can be favorably insulated by the sound-absorbing, sound-insulating, and heat-insulating member I (the chip mixed body 10) with the heat insulation performance of the sound-absorbing, sound-insulating, and heat-insulating member I, as described above.

According to the above, the middle wall member 30b in the fourth embodiment can exhibit sound absorption and sound insulation performances and heat insulation performance substantially similar to those of the third embodiment described above while exhibiting still more favorable sound insulation performance than that of the third embodiment on the basis of the synergetic sound insulation performance of the double wall structure including the outer wall member 31 and the sound-absorbing, sound-insulating, and heat-insulating member Ia described above, and the non-air permeable layer 20 and the fiber chips of the sound-absorbing, sound-insulating, and heat-insulating member Ia. The other operation/working-effects are similar to those of the third embodiment described above.

### (FIFTH EMBODIMENT)

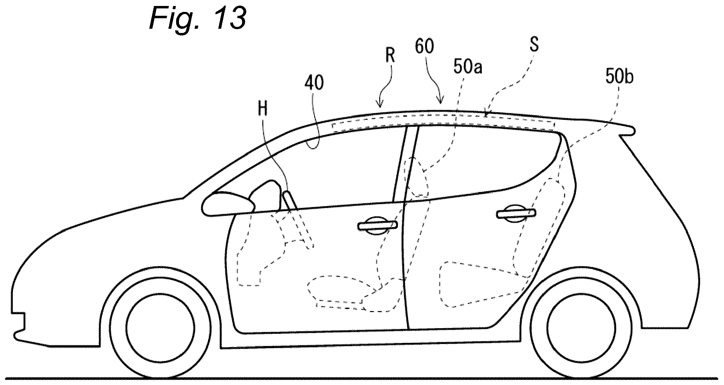

FIG. 13 illustrates a fifth embodiment of the present invention that is applied to a motor vehicle. The motor vehicle includes a vehicle compartment 40. Front seats 50a (only the left front seat is illustrated in FIG. 13) on both left and right sides and a rear seat 50b are disposed in the vehicle compartment 40. It is to be noted that reference sign H denotes a steering wheel in FIG. 13.

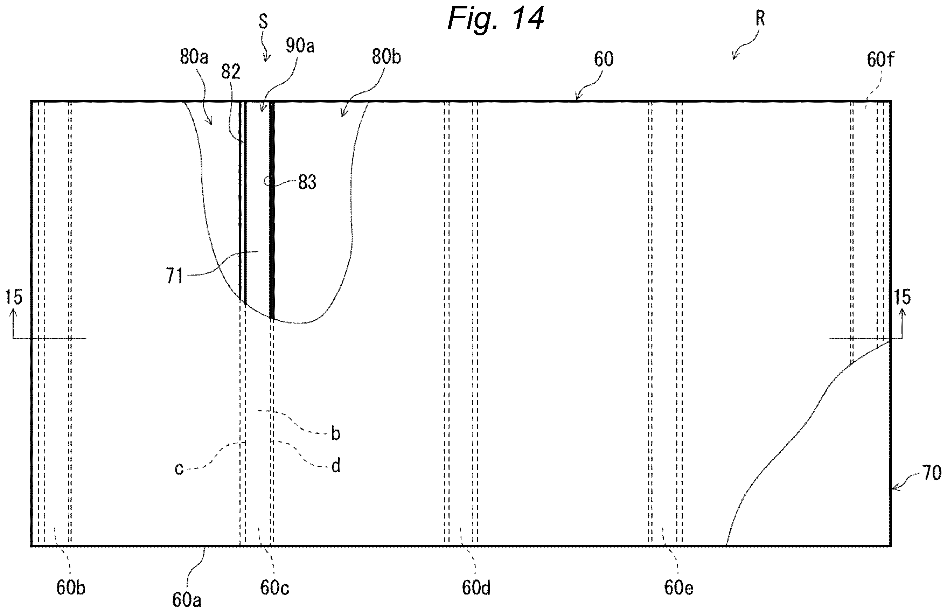

The motor vehicle also includes a roof R. The roof R is formed to have a rectangular-plate shape as illustrated in FIG. 13 so as to match a ceiling opening portion (not illustrated) of the motor vehicle. The roof R is fitted into the ceiling opening portion described above. As illustrated in FIG. 13 or 14, the roof R includes a roof panel 60 and a roof headlining 70 playing a role as the inner lining of the roof panel 60. It is to be noted that the roof panel 60 and the roof headlining 70 correspond respectively to an outer plate and an inner plate of the roof R.

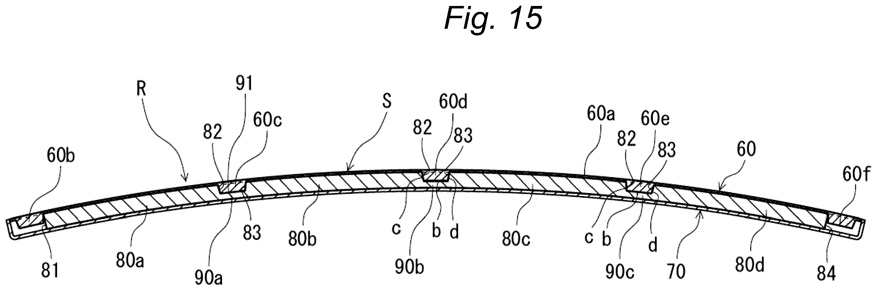

As illustrated in FIG. 14 or 15, the roof panel 60 is integrally formed by iron material so as to have a panel body 60a and a plurality of ribs 60b to 60f for reinforcement.

As is understood from FIGS. 14 and 15, the panel body 60a is formed in the form of a rectangular-plate shape. The panel body 60a is, as illustrated in FIG. 13 or 15, formed to have a gently curved shape that protrudes toward the upper side in FIG. 13 or 15 in the front-rear direction of the panel body 60a (the left-right direction illustrated in FIG. 13 or 15).

As illustrated in FIG. 14 or 15, the plurality of ribs 60b to 60f for reinforcement are respectively formed to have a transverse section in the form of an inverted trapezoidal shape. The plurality of ribs 60b to 60f for reinforcement are respectively formed to protrude downward (toward the roof headlining 70) from the inner surface of the panel body 60a. In addition, the plurality of ribs 60b to 60f for reinforcement are respectively formed to have a long shape along the left-right direction of the panel body 60a (the up-down direction illustrated in FIG. 14).

In the plurality ribs 60b to 60f for reinforcement, the plurality ribs 60c to 60f are all formed respectively to have the same transverse section in the form of an inverted trapezoidal shape, as shown in any of FIGS. 14 to 16. It is to be noted that the rib 60b for reinforcement is formed to have a transverse section in the form of an inverted trapezoidal shape wider than that of each of the ribs 60c to 60f for reinforcement.

The plurality of ribs 60c to 60f for reinforcement are all formed respectively to have a transverse section in the form of an inverted trapezoidal shape, as described above. Thus, the configuration of the rib 60c for reinforcement of the ribs 60c to 60f for reinforcement will be explained by taking it as an example.

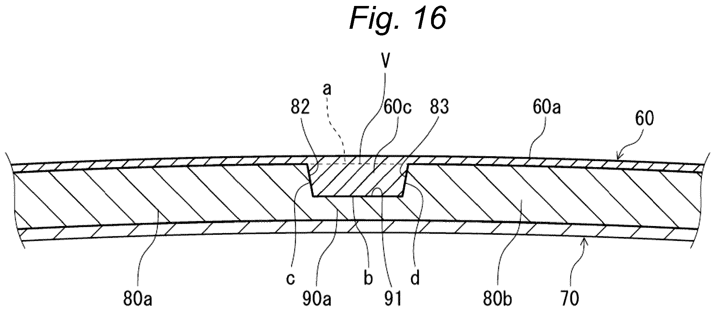

As illustrated in FIG. 16, the rib 60c for reinforcement is formed to have a transverse section in the form of an inverted trapezoidal shape by a portion of the inner surface of the panel body 60a, which is formed by a base surface portion a, a protruding end face portion b, a front leg surface portion c, and a rear leg surface portion d.

Herein, the protruding end face portion b is opposed to the base surface portion a to be positioned in parallel with the base surface portion a. The protruding end face portion b is formed to have a width (the width along the front-rear direction of the panel body 60a) narrower than that of the base surface portion a. The protruding end face portion b is positioned at a central portion thereof in its width direction so as to face the middle of the base surface portion a in the width direction of the base surface portion a.

The front leg surface portion c is positioned on the front side (the left side illustrated in FIG. 16) than the rear leg surface portion d. The front leg surface portion c is formed to be inclined rearward and downward from the front end of the base surface portion a so as to couple the front end of the base surface portion a to the front end of the protruding end face portion b. Meanwhile, the rear leg surface portion d is formed to be inclined forward and downward from the rear end of the base surface portion a so as to couple the rear end of the base surface portion a to the rear end of the protruding end face portion b. It is to be noted that the inclination angle of the front leg surface portion c in the rib 60c with respect to the base surface portion a is the same as the inclination angle of the rear leg surface portion d in the rib 60c with respect to the base surface portion a.

The ribs 60d to 60f for reinforcement of the remaining ribs 60b and 60d to 60f for reinforcement are formed respectively to have a transverse section in the form of the same inverted trapezoidal shape by the base surface portion a, the protruding end face portion b, the front leg surface portion c, and the rear leg surface portion d as with the rib 60c for reinforcement. However, although the rib 60b for reinforcement is formed to have a transverse section in the form of an inverted trapezoidal shape by the base surface portion a, the protruding end face portion b, the front leg surface portion c, and the rear leg surface portion d as with the rib 60c for reinforcement, the rib 60b for reinforcement is formed to have a transverse section in the form of a wider inverted trapezoidal shape than that of the rib 60c for reinforcement as described above.

The roof headlining 70 is formed by a urethane foam layer (not illustrated) having a cellular structure including a plurality of open cells and both glass fiber layers (not illustrated) that strengthen the urethane foam layer from both surfaces of the urethane foam layer.

As illustrated in FIG. 13, the motor vehicle includes a roof silencer S according to the present invention. In the fifth embodiment, the roof silencer S is sandwiched between the roof panel 60 and the roof headlining 70 of the roof R of the motor vehicle as shown in any of FIGS. 13 to 16 as a silencer having sound absorption performance and sound insulation performance for sounds (noises), and heat insulation performance for thermal energy.

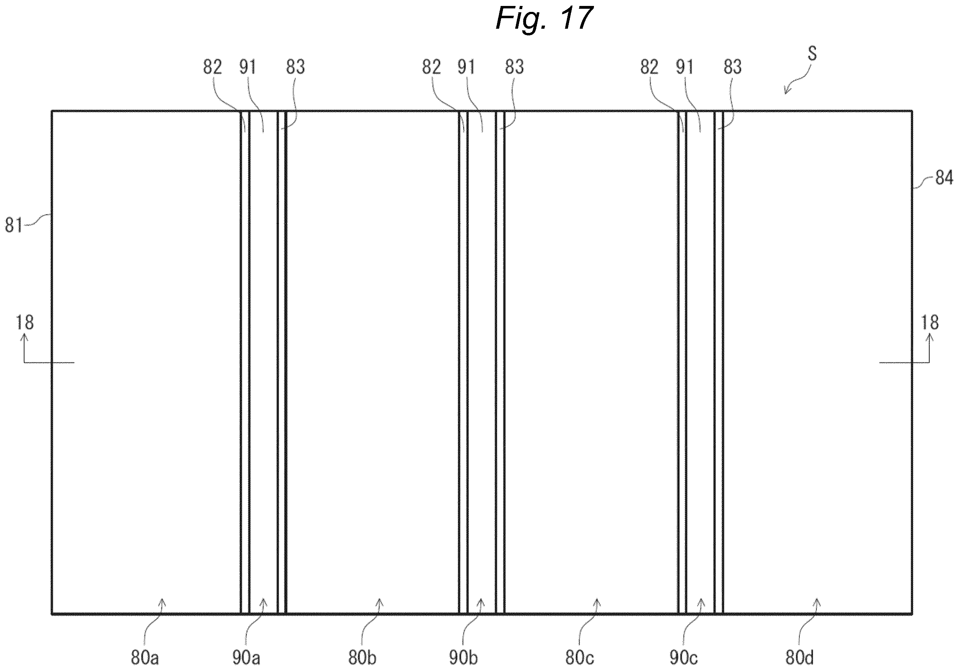

As is understood from FIGS. 14 and 15, the roof silencer S is formed to have a rectangular-plate shape to match the shape of the roof R. As illustrated in any of FIGS. 14 to 18, the roof silencer S is integrally formed by molding so as to include a plurality of thick portions 80a to 80d and a plurality of thin portions 90a to 90c.

As illustrated in FIG. 14 or 15, the plurality of thick portions 80a to 80d are formed to be sequentially positioned in order from the front side (the front side of the motor vehicle) of the roof silencer S to the rear side (the rear side of the motor vehicle) of the roof silencer S. As is understood from FIGS. 14 and 15, the plurality of thick portions 80a to 80d are formed respectively to have a rectangular-plate shape. The thick portion 80a of the plurality of the thick portions 80a to 80d is sandwiched between the panel body 60a and the roof headlining 70 between both the ribs 60b and 60c for reinforcement. The thick portion 80a is opposed to the rib 60b for reinforcement at a front end face portion 81 of the thick portion 80a. In addition, the thick portion 80a includes a rear end face portion 82 as illustrated in FIG. 15, 16, or 18. The rear end face portion 82 is formed to be inclined rearward and downward from the upper end to the lower end of the rear end face portion 82 along the front leg surface portion c of the rib 60c for reinforcement. The rear end face portion 82 abuts airtightly on the front leg surface portion c of the rib 60c for reinforcement over the entire surface of the rear end face portion 82.

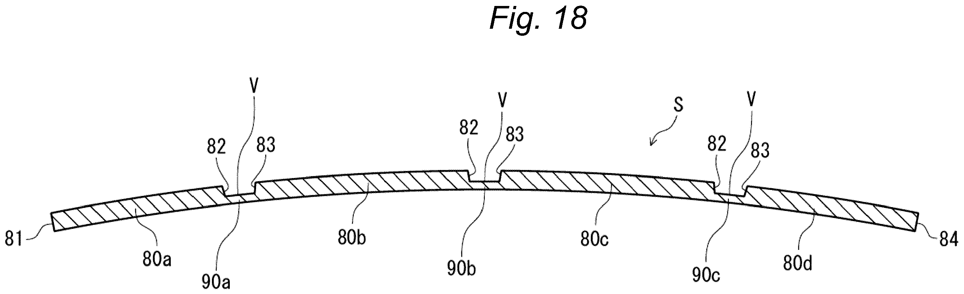

As illustrated in FIG. 15 or 18, the thick portion 80b includes a front end face portion 83. The front end face portion 83 is formed to be inclined forward and downward from the upper end to the lower end of the front end face portion 83 along the rear leg surface portion d of the rib 60c for reinforcement. The front end face portion 83 of the thick portion 80b abuts airtightly on the rear leg surface portion d of the rib 60c for reinforcement. In addition, the thick portion 80b includes a rear end face portion (denoted with a reference numeral 82 below) configured as with the rear end face portion 82 of the thick portion 80a, as illustrated in FIG. 15 or 18. The rear end face portion 82 of the thick portion 80b is formed to be inclined rearward and downward from the upper end to the lower end of the rear end face portion 82 along the front leg surface portion c of the rib 60d for reinforcement. The rear end face portion 82 of the thick portion 80b abuts airtightly on the front leg surface portion c of the rib 60d for reinforcement over the entire surface of the rear end face portion 82.

As illustrated in FIG. 15 or 18, the remaining thick portions 80c and 80d include respectively a front end face portion and a rear end face portion having configurations similar to those of the front end face portion 83 and the rear end face portion 82 of the thick portion 80b.

Herein, the front end face portion (denoted with a reference numeral 83 below) of the thick portion 80c is formed to be inclined forward and downward from the upper end to the lower end of the front end face portion along the rear leg surface portion d of the rib 60d for reinforcement. The rear end face portion (denoted with a reference numeral 82 below) of the thick portion 80c is formed to be inclined backward and downward from the upper end to the lower end of the rear end face portion along the front leg surface portion c of the rib 60e for reinforcement. Accordingly, the front end face portion 83 of the thick portion 80c abuts airtightly on the rear leg surface portion d of the rib 60d for reinforcement over the entire surface of the rear end face portion 83. Meanwhile, the rear end face portion 82 of the thick portion 80c abuts airtightly on the front leg surface portion c of the rib 60e for reinforcement over the entire surface of the rear end face portion 82.

In addition, the front end face portion (denoted with a reference numeral 83 below) of the thick portion 80d is formed to be inclined forward and downward from the upper end to the lower end of the front end face portion along the rear leg surface portion d of the rib 60e for reinforcement. The rear end face portion (denoted with a reference numeral 82 below) of the thick portion 80d is formed to be inclined rearward and downward from the upper end to the lower end of the rear end face portion along the rear leg surface portion d of the rib 60e for reinforcement. Accordingly, the front end face portion 83 of the thick portion 80d abuts airtightly on the rear leg surface portion d of the rib 60e for reinforcement over the entire surface of the front end face portion 83. Meanwhile, a rear end face portion 84 of the thick portion 80d is opposed to the rib 60f for reinforcement.

As illustrated in FIG. 15 or 18, the thin portion 90a of the plurality of thin portions 90a to 90c is integrally formed to be coupled to a region between the respective lower portions of both the thick portions 80a and 80b so as to couple the thick portion 80b to the thick portion 80a. Herein, the thin portion 90a is formed at its upper surface portion 91 on a position which is shifted and positioned downward (toward the roof headlining 70) by the protruding length of the rib 60c from the inner surface of the panel body 60a. This means that the thin portion 90a is formed thinner than each thickness of both the thick portions 80a and 80b to match each lower portion of both the thick portions 80a and 80b described above.

According to the above, the inclined rear end face portion 82 of the thick portion 80a, the upper surface portion 91 of the thin portion 90a, and the inclined front end face portion 83 of the thick portion 80b form a recessed portion V of a transverse section in the form of an inverted trapezoidal shape, which corresponds to the external shape of the rib 60c for reinforcement. This results in that the ribs 60c for reinforcement is fitted in the recessed portion V so as to airtightly close contact with the inclined rear end face portion 82 of the thick portion 80a, the upper surface portion 91 of the thin portion 90a, and the inclined front end face portion 83 of the thick portion 80b at the front leg surface portion c, the protruding end face portion b, and the rear leg surface portion d of the rib 60c for reinforcement.

The remaining thin portions 90b and 90c have respectively a configuration similar to the configuration of the thin portion 90a described above. Herein, the thin portion 90b is formed between each of the lower portions of both the thick portions 80b and 80c so as to couple the thick portion 80c to the thick portion 80b. The thin portion 90c is formed between each of the lower portions of both the thick portions 80c and 80d so as to couple the thick portion 80d to the thick portion 80c.

Accordingly, in the configuration relationship of the thin portion 90b with both the thick portions 80b and 80c, the inclined rear end face portion 82 of the thick portion 80b, the upper surface portion 91 of the thin portion 90b, and the inclined front end face portion 83 of the thick portion 80c form a recessed portion (denoted with reference sign V below) in the form of an inverted trapezoidal shape which matches the external shape of the rib 60d for reinforcement. as with the recessed section V described above. Thus, the rib 60d for reinforcement is fitted into the recessed portion V at its front leg surface portion c, protruding end face portion b, and rear leg surface portion d so as to airtightly close contact with the inclined rear end face portion 82 of the thick portion 80b, the upper surface portion 91 of the thin portion 90c, and the inclined front end face portion 83 of the thick portion 80c.

Furthermore, in the configuration relationship of the thin portion 90c with both the thick portions 80c and 80d, the inclined rear end face portion 82 of the thick portion 80c, the upper surface portion 91 of the thin portion 90c, and the inclined front end face portion 83 of the thick portion 80d form a recessed portion (denoted with reference sign V below) in the form of an inverted trapezoidal shape which matches the external shape of the rib 60e for reinforcement, as with the recessed section V described above. Thus, the rib 60e for reinforcement is fitted into the recessed portion V at its front leg surface portion c, protruding end face portion b, and rear leg surface portion d so as to airtightly close contact with the inclined rear end face portion 82 of the thick portion 80b, the upper surface portion 91 of the thin portion 90c, and the inclined front end face portion 83 of the thick portion 80c.

In the fifth embodiment configured as described above, when noises enter the roof R from the outside of the motor vehicle, the noises (referred to as external noises below) are decreased by the roof panel 60 of the iron plate on the basis of the sound insulation performance of the roof panel 60 and enter the roof silencer S from the upper surface of the roof silencer S.

Then, the external noises can be favorably absorbed on the basis of the synergetic sound absorption performance of the plurality of open cell urethane chips Q, the plurality of chip-shaped fiber lumps F, and the plurality of chip-shaped fiber pieces G of the roof silencer S, as in the first embodiment described above, and insulated on the basis of the sound insulation performance of the plurality of semi-closed cell urethane chips P of the roof silencer S.

Thus, occupants in the vehicle compartment 40 of the motor vehicle can maintain comfortable feeling in the vehicle compartment without being put in an uncomfortable noise environment due to the external noises entering the roof silencer S through the roof panel 60.

In addition, even when, for example, loud sounds from a sound source in the vehicle compartment 40 enter the roof silencer S through the roof headlining 70 as noises (referred to as interior noises below), the interior noises can be favorably absorbed by the roof silencer S with the plurality of open cell urethane chips Q, the labyrinthine shapes of the plurality of paths K, the plurality of chip-shaped fiber lumps F, and the plurality of chip-shaped fiber pieces G, as described above. The sounds from the sound source in the vehicle compartment 40 do not thus leak from the roof panel 60 to the outside of the roof panel 60.

Furthermore, even when heat such as solar heat, or the like enters the roof silencer S through the roof panel 60, the heat can be favorably blocked by the roof silencer S with the semi-closed cell structure of the plurality of semi-closed cell urethane chips P thereof from entering the vehicle compartment 40 through the roof headlining 70

This means that the roof silencer S, which is the sound-absorbing, sound-insulating, and heat-insulating member I, is capable of exhibiting favorable heat insulation performance for the heat such as solar heat, or the like on the basis of the semi-closed cell structure of the plurality of semi-closed cell urethane chips P. The heat such as solar heat, or the like entering the roof silencer S does not thus prevent the occupants from the comfortable feeling in the vehicle compartment 40 of the motor vehicle. The other operation/work effects are the same as those of the third embodiment.

It is to be noted that for carrying out the present invention, various modifications are listed as follows without being limited to the respective embodiments described above.
(1) For carrying out the present invention, the chip mixed body 10 may adopt a closed-cell urethane chip instead of a semi-closed cell urethane chip unlike the first embodiment described above. In this case, the chip mixed body 10 is formed by being dispersively mixed into the liquid binder U described in the first embodiment along with the plurality of open cell urethane chips Q and the plurality of fiber chips described in the first embodiment and then by hardening of the binder U.
   Herein, the plurality of closed-cell urethane chips are formed by crushing offcuts with a crusher and then pulverizing the offcuts. The offcuts are produced from closed-cell urethane foam material in a process of manufacturing the closed-cell urethane foam material. The plurality of closed-cell urethane chips are respectively formed so as to have a structure closed per cell in the binder U. The plurality of closed-cell urethane chips therefore are not opened at each cell thereof to the outside of the chip mixed body 10.
   This means that the plurality of closed-cell urethane chips are respectively formed by a closed-cell structure having a cellular shape suitable to exhibit sound insulation performance and heat insulation performance.
   Thus, when noises enter the chip mixed body 10, the noises can be favorably absorbed on the basis of both of the sound absorption performance of the plurality of open cell urethane chips Q and the sound absorption performance of the plurality of fiber chips of the chip mixed body 10 as in the first embodiment described above, and also favorably insulated by the plurality of closed-cell urethane chips on the basis of the closed-cell structure of the plurality of closed-cell urethane chips.
   In addition, when heat enters the chip mixed body 10, the heat can be favorably insulated by the plurality of closed-cell urethane chips on the basis of each closed-cell structure of the plurality of closed-cell urethane chips.
(2) For carrying out the present invention, the chip mixed body 10 may also include the plurality of closed-cell urethane chips described above in addition to the plurality of semi-closed cell urethane chips in the first embodiment described above.
(3) For carrying out the present invention, the forming material of the binder U described in the first embodiment above is not limited to urethane and it is sufficient if a thermosetting resin is adopted.
(4) For carrying out the present invention, the plurality of semi-closed cell urethane chips P, the plurality of open cell urethane chips Q, the plurality of fiber chips F, and the plurality of fiber pieces G described in the first embodiment above do not have to be evenly stirred and mixed and it is sufficient if the plurality of semi-closed cell urethane chips P, the plurality of open cell urethane chips Q, the plurality of fiber chips F, and the plurality of fiber pieces G are stirred and mixed not necessarily uniformly, but at least dispersively.
(5) For carrying out the present invention, the sound-absorbing, sound-insulating, and heat-insulating member according to the present invention may be applied, for example, to a ceiling wall or a floor wall of architecture as a wall member, unlike the third embodiment described above.
(6) For carrying out the present invention, the roof panel 60a of the roof R of the motor vehicle does not have to include the plurality of ribs 60b to 60f for reinforcement as necessary unlike the fifth embodiment described above. In this case, it is sufficient if the roof silencer S is modified to thicken the plurality of thin portions as with the plurality of thick portions.
(7) For carrying out the present invention, although the air layer g is formed between the outer wall member 31 and the middle wall member 30a in the third embodiment described above as illustrated in FIG. 11, the outer wall member 31 may be stacked to abut on the middle wall member 30a by abolishing the air layer g. Even in this case, sound absorption performance as the middle wall member 30a can be ensured in substantially the same manner as in the case where the air layer is not abolished.

## Claims

1. A sound-absorbing, sound-insulating, and heat-insulating member formed with a chip mixed body, comprising:
a plurality of semi-closed cell urethane chips, a plurality of open cell urethane chips, a plurality of fiber chips, and a binder,
wherein said plurality of semi-closed cell urethane chips each include a semi-closed cell structure,
said plurality of open cell urethane chips each include an open cell structure, and
said plurality of fiber chips each include at least one of a chip-shaped fiber lump and a chip-shaped fiber fragment, and
wherein said tip mixed body is formed by mixing said plurality of semi-closed cell urethane chips, said plurality of open cell urethane chips, and said plurality of fiber chips dispersively with said binder.

2. A sound-absorbing, sound-insulating, and heat-insulating member formed with a tip mixed body, comprising:
a plurality of closed-cell urethane chips, a plurality of open cell urethane chips, a plurality of fiber chips, and a binder,
wherein said plurality of closed-cell urethane chips each include a closed-cell structure,
said plurality of open cell urethane chips each include an open cell structure, and
said plurality of fiber chips each include at least one of a chip-shaped fiber lump and a chip-shaped fiber fragment, and
wherein said chip mixed body is formed by mixing said plurality of closed-cell urethane chips, said plurality of open cell urethane chips, and said plurality of fiber chips dispersively with said binder.

3. The sound-absorbing, sound-insulating, and heat-insulating member according to claim 1, comprising a plurality of closed-cell urethane chips,
wherein said plurality of closed-cell urethane chips each include a closed-cell structure, and
wherein said tip mixed body is formed by mixing said plurality of closed-cell urethane chips, said plurality of semi-closed cell urethane chips, said plurality of open cell urethane chips, and said plurality of fiber chips dispersively with said binder.

4. The sound-absorbing, sound-insulating, and heat-insulating member according to claim 1,
wherein said plurality of semi-closed cell urethane chips are formed by pulverizing offcuts, said offcuts being produced from urethane foam material including a semi-closed cell structure in a process of manufacturing said urethane foam material,
said plurality of open cell urethane chips are formed by pulverizing offcuts, said offcuts being produced from urethane foam material including an open cell structure in a process of manufacturing said urethane foam material,
said plurality of fiber chips are formed by pulverizing fiber material for discarding, and
wherein said chip mixed body is formed by mixing said plurality of semi-closed cell urethane chips, said plurality of open cell urethane chips, and said plurality of fiber chips dispersively with said binder in a liquid state of said binder, and then under hardening of said binder.

5. The sound-absorbing, sound-insulating, and heat-insulating member according to claim 2,
wherein said plurality of closed-cell urethane chips are formed by pulverizing offcuts, said offcuts being produced from urethane foam material including a closed-cell structure in a process of manufacturing said urethane foam material,
said plurality of open cell urethane chips are formed by pulverizing offcuts, said offcuts being produced from urethane foam material including an open cell structure in a process of manufacturing said urethane foam material,
said plurality of fiber chips are formed by pulverizing fiber material for discarding, and
wherein said chip mixed body is formed by mixing said plurality of closed-cell urethane chips, said plurality of open cell urethane chips, and said plurality of fiber chips dispersively with said binder in a liquid state of said binder, and then under hardening of said binder.

6. The sound-absorbing, sound-insulating, and heat-insulating member according to claim 1,
wherein representing said plurality of semi-closed cell urethane chips and said plurality of open cell urethane chips respectively as a urethane chip, said chip mixed body includes at least one labyrinthine path, said at least one labyrinthine path being formed so as to pass between the urethane chips facing each other among said urethane chips in said binder, and
said plurality of fiber chips are dispersively positioned in said at least one labyrinthine path.

7. The sound-absorbing, sound-insulating, and heat-insulating member according to claim 2,
wherein representing said plurality of closed-cell urethane chips and said plurality of open cell urethane chips respectively as a urethane chip, said chip mixed body includes at least one labyrinthine path, said at least one labyrinthine path being formed so as to pass between the urethane chips facing each other among said urethane chips in said binder, and
said plurality of fiber chips are dispersively positioned in said at least one labyrinthine path.

8. The sound-absorbing, sound-insulating, and heat-insulating member according to claim 6 or 7, comprising a non-air permeable layer,
wherein said chip mixed body is formed to be layered, and
said non-air permeable layer is stacked on said layered chip mixed body.

9. A wall member for architecture formed with a tip mixed body and applied to a wall body for architecture, said wall member for architecture comprising:
a plurality of semi-closed cell urethane chips, a plurality of open cell urethane chips, a plurality of fiber chips, and a binder,
wherein said plurality of semi-closed cell urethane chips each include a semi-closed cell structure,
said plurality of open cell urethane chips each include an open cell structure, and
said plurality of fiber chips each include at least one of a chip-shaped fiber lump and a chip-shaped fiber fragment, and
wherein said tip mixed body is formed by mixing said plurality of semi-closed cell urethane chips, said plurality of open cell urethane chips, and said plurality of fiber chips dispersively with said binder.

10. A wall member for architecture formed with a tip mixed body and applied to a wall body for architecture, said wall member for architecture comprising:
a plurality of closed-cell urethane chips, a plurality of open cell urethane chips, a plurality of fiber chips, and a binder,
wherein said plurality of closed-cell urethane chips each include a closed-cell structure,
said plurality of open cell urethane chips each include an open cell structure, and
said plurality of fiber chips each include at least one of a chip-shaped fiber lump and a chip-shaped fiber fragment,
wherein said tip mixed body is formed by mixing said plurality of closed-cell urethane chips, said plurality of open cell urethane chips, and said plurality of fiber chips dispersively with said binder.

11. The wall member for architecture according to claim 9, comprising a plurality of closed-cell urethane chips,
wherein said plurality of closed-cell urethane chips each include a closed-cell structure, and
wherein said tip mixed body is formed by mixing said plurality of closed-cell urethane chips, said plurality of semi-closed cell urethane chips, said plurality of open cell urethane chips, and said plurality of fiber chips dispersively with said binder.

12. The wall member for architecture according to claim 9,
wherein representing said plurality of semi-closed cell urethane chips and said plurality of open cell urethane chips respectively as a urethane chip, said chip mixed body includes at least one labyrinthine path, said at least one labyrinthine path being formed so as to pass between the urethane chips facing each other among said urethane chips in said binder, and
said plurality of fiber chips are dispersively positioned in said at least one labyrinthine path.

13. The wall member for architecture according to claim 10,
wherein representing said plurality of closed-cell urethane chips and said plurality of open cell urethane chips respectively as a urethane chip, said chip mixed body includes at least one labyrinthine path, said at least one labyrinthine path being formed so as to pass between the urethane chips facing each other among said urethane chips in said binder, and
said plurality of fiber chips are dispersively positioned in said at least one labyrinthine path.

14. The wall member for architecture according to claim 12 or 13, comprising a non-air permeable layer,
wherein said chip mixed body is formed to be layered, and
said non-air permeable layer is stacked on said layered chip mixed body.

15. A roof silencer for a motor vehicle formed with a chip mixed body and stacked between outer and inner plates forming a roof of the motor vehicle so as to face a vehicle compartment of the motor vehicle through the inner plate, the roof silencer comprising:
a plurality of semi-closed cell urethane chips, a plurality of open cell urethane chips, a plurality of fiber chips, and a binder,
wherein said plurality of semi-closed cell urethane chips each include a semi-closed cell structure,
said plurality of open cell urethane chips each include an open cell structure, and
said plurality of fiber chips each include at least one of a chip-shaped fiber lump and a chip-shaped fiber fragment,
wherein said chip mixed body is formed by mixing said plurality of semi-closed cell urethane chips, said plurality of open cell urethane chips, and said plurality of fiber chips dispersively with said binder.

16. A roof silencer for a motor vehicle formed with a chip mixed body and stacked between outer and inner plates forming a roof of the motor vehicle so as to face a vehicle compartment of the motor vehicle through the inner plate, the roof silencer comprising:
a plurality of closed-cell urethane chips, a plurality of open cell urethane chips, a plurality of fiber chips, and a binder,
wherein said plurality of closed-cell urethane chips each include a closed-cell structure,
said plurality of open cell urethane chips each include an open cell structure, and
said plurality of fiber chips each include at least one of a chip-shaped fiber lump and a chip-shaped fiber fragment, and
wherein said chip mixed body is formed by mixing said plurality of closed-cell urethane chips, said plurality of open cell urethane chips, and said plurality of fiber chips dispersively with said binder.

17. The roof silencer for a motor vehicle according to claim 15,
wherein representing said plurality of semi-closed cell urethane chips and said plurality of open cell urethane chips respectively as a urethane chip, said chip mixed body includes at least one labyrinthine path, said at least one labyrinthine path being formed so as to pass between said urethane chips facing each other among said urethane chips in said binder, and
said plurality of fiber chips are dispersively positioned in said at least one labyrinthine path.

18. The roof silencer for a motor vehicle according to claim 16,
wherein representing said plurality of closed-cell urethane chips and said plurality of open cell urethane chips respectively as a urethane chip, said chip mixed body includes at least one labyrinthine path, said at least one labyrinthine path being formed so as to pass between said urethane chips facing each other among said urethane chips in said binder, and
said plurality of fiber chips are dispersively positioned in said at least one labyrinthine path.
